(19) **Europäisches Patentamt / European Patent Office / Office européen des brevets**

(11) **EP 4 362 559 A1**

(12) # EUROPEAN PATENT APPLICATION
published in accordance with Art. 153(4) EPC

(43) Date of publication:
**01.05.2024 Bulletin 2024/18**

(21) Application number: **22836664.7**

(22) Date of filing: **08.06.2022**

(51) International Patent Classification (IPC):
**H04W 52/02** (2009.01)   **H04W 56/00** (2009.01)
**H04W 72/04** (2023.01)   **H04W 74/08** (2009.01)

(52) Cooperative Patent Classification (CPC):
**H04W 52/02; H04W 56/00; H04W 72/04;**
**H04W 74/08;** Y02D 30/70

(86) International application number:
**PCT/CN2022/097713**

(87) International publication number:
**WO 2023/279909 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.07.2021  CN 202110765561**

(71) Applicant: **Huawei Technologies Co., Ltd.**
**Shenzhen, Guangdong 518129 (CN)**

(72) Inventors:
• **HOU, Hailong**
  **Shenzhen, Guangdong 518129 (CN)**
• **JIN, Zhe**
  **Shenzhen, Guangdong 518129 (CN)**
• **LUO, Zhihu**
  **Shenzhen, Guangdong 518129 (CN)**
• **QU, Weilin**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **COMMUNICATION METHOD AND COMMUNICATION APPARATUS**

(57)    This application provides a communication method and a communication apparatus. The method includes: sending first configuration information to a plurality of terminal devices, where the first configuration information is used to configure the plurality of terminal devices to detect paging early indication information on a first bandwidth unit, and the paging early indication information indicates to detect or not to detect paging indication information; and sending a reference signal on the first bandwidth unit, where the reference signal is used by the plurality of terminal devices to perform time synchronization and/or frequency synchronization with a network device, to reduce power consumption of a terminal device.

200

S201: Send first configuration information to a plurality of terminal devices, where the first configuration information is used to configure the plurality of terminal devices to detect paging early indication information on a first bandwidth unit, and the paging early indication information indicates to detect or not to detect paging indication information

S202: Send a reference signal on the first bandwidth unit, where the reference signal is used by the plurality of terminal devices to perform time synchronization and/or frequency synchronization

FIG. 2

## Description

This application claims priority to Chinese Patent Application No. 202110765561.0, filed with the China National Intellectual Property Administration on July 6, 2021 and entitled "COMMUNICATION METHOD AND COMMUNICATION APPARATUS", which is incorporated herein by reference in its entirety.

## TECHNICAL FIELD

This application relates to the communication field, and more specifically, to a communication method and a communication apparatus.

## BACKGROUND

In a mobile communication system, a network may page a terminal device by using a paging process, to establish a connection to the terminal device. Specifically, a network device sends, within a paging occasion (paging occasion, PO) resource, control information having a paging identifier. The control information indicates a data channel that carries a paging message. The terminal device receives the paging message by monitoring the control information having the paging identifier.

Currently, a network device may send paging early indication information to indicate a paged terminal device to detect control information within a PO, to reduce power consumption caused by detecting control information by the terminal device within each PO. However, a wake-up signal and a reference signal used by the terminal device to perform synchronization may not be in a same bandwidth unit. In this case, the terminal device needs to switch a bandwidth unit to perform time synchronization and/or frequency synchronization, and then switch back to a bandwidth unit for detecting the paging early indication information. Switching the bandwidth unit causes high power consumption of the terminal device. A paging process needs to be improved to meet a low power consumption requirement of a low-power-consumption terminal device.

## SUMMARY

This application provides a communication method and a communication apparatus, to reduce power consumption of a terminal device.

According to a first aspect, a communication method is provided. The method may be performed by a network device or a module (for example, a chip) disposed in (or used in) a network device.

The method includes: sending first configuration information to a plurality of terminal devices, where the first configuration information is used to configure the plurality of terminal devices to detect paging early indication information on a first bandwidth unit, and the paging early indication information indicates to detect or not to detect paging indication information; and sending a reference signal on the first bandwidth unit, where the reference signal is used by the plurality of terminal devices to perform time synchronization and/or frequency synchronization with the network device.

According to the foregoing solution, the network device may configure a wake-up signal of a terminal device in a bandwidth unit including a synchronization reference signal. In this way, the terminal device can perform synchronization calibration with the network device and detect the wake-up signal without bandwidth switching, to maintain low power consumption when the terminal device is not paged.

With reference to the first aspect, in some implementations of the first aspect, paging resources used by at least two of the plurality of terminal devices to detect the paging indication information are in different bandwidth units.

According to the foregoing solution, the plurality of terminal devices receive a paging message on a plurality of bandwidth units, so that a paging capacity can be increased, to enable more terminal devices to initiate a paging process.

With reference to the first aspect, in some implementations of the first aspect, the method further includes: sending a plurality of pieces of second configuration information to the plurality of terminal devices. One of the plurality of pieces of second configuration information is used to configure a paging resource in one of the plurality of bandwidth units.

According to the foregoing solution, the network device separately configures a paging resource for each of the plurality of terminal devices. Therefore, flexibility of paging resource configuration can be improved.

With reference to the first aspect, in some implementations of the first aspect, third configuration information is sent to the plurality of terminal devices. The third configuration information is used to configure a paging resource in each of the plurality of bandwidth units.

According to the foregoing solution, the network device configures the paging resource in each bandwidth unit by using one piece of configuration information, namely, the third configuration information. In other words, paging resources of the plurality of terminal devices share one set of configuration information. Therefore, configuration signaling overheads can be reduced.

With reference to the first aspect, in some implementations of the first aspect, the plurality of bandwidth units include the first bandwidth unit.

According to the foregoing solution, a bandwidth unit used by the terminal device to detect the reference signal and the paging early indication information includes a paging resource. In other words, the paging resource, the paging early indication information, and the reference signal may be in a same bandwidth unit, so that some terminals can receive detect, without switching a bandwidth unit, whether to be woken up and receive the paging indication information. Therefore, the power consumption of the terminal device can be further reduced.

With reference to the first aspect, in some implementations of the first aspect, the method further includes: sending fourth configuration information. The fourth configuration information is used to configure the plurality of bandwidth units. The plurality of bandwidth units are used by the terminal device to perform an initial access process. The fourth configuration information includes identification information of the plurality of bandwidth units. Identification information of one bandwidth unit includes first identification information and second identification information. The first identification information indicates that the bandwidth unit is a bandwidth unit used by the terminal device to perform the initial access process. The second identification information identifies one of the bandwidth units used by the terminal device to perform the initial access process.

According to the foregoing solution, when configuring the plurality of bandwidth units for performing the initial access process, the network device may perform identification by using two pieces of identification information. One piece of identification information identifies that the bandwidth unit is the bandwidth unit that performs initial access, and the other piece of identification information is used to determine that the bandwidth unit is specifically one of the bandwidth units that performs the initial access process, so that the terminal device can determine, based on the identification information, the bandwidth unit that performs the initial access process.

With reference to the first aspect, in some implementations of the first aspect, the method further includes: determining, based on identification information of the plurality of terminal devices and a mapping rule, a bandwidth unit in which a paging resource of each of the plurality of terminal devices is located, where the mapping rule is used to represent a mapping relationship between identification information of the terminal device and the bandwidth unit; or sending a plurality of pieces of resource indication information to the plurality of terminal devices, where one piece of resource indication information indicates a bandwidth unit in which a paging resource of one of the plurality of terminal devices is located. The paging resource is used by the terminal device to detect the paging indication information.

According to the foregoing solution, in the plurality of bandwidth units that are used to perform the initial access process, the network device and the terminal device may determine, based on the identification information of the terminal device and the mapping rule, the bandwidth unit in which the paging resource of the terminal device is located. In such manner of implicitly determining the bandwidth unit in which the paging resource is located, the network device and the terminal device can reach a consensus on the bandwidth unit in which the paging resource of the terminal device is located when avoiding signaling interaction.

With reference to the first aspect, in some implementations of the first aspect, a paging resource of a first terminal device is in a second bandwidth unit, and the method further includes: sending first paging early indication information on the first bandwidth unit, where the first paging early indication information indicates the first terminal device to detect the paging indication information; and sending first paging indication information on the paging resource of the first terminal device in the second bandwidth unit, where the first paging indication information indicates a first resource, and the first resource is used to carry a paging message of the first terminal device; and/or the first paging indication information indicates that system information is updated.

According to the foregoing solution, when the network device needs to wake up the first terminal device, the network device wakes up the first terminal device by using the first paging early indication information, and sends the first paging indication information on the paging resource of the first terminal device in the second bandwidth unit. After it is determined that the terminal device is woken up, the terminal device detects the paging indication information on the bandwidth unit in which the paging resource is located. Therefore, the plurality of terminal devices can maintain a low power consumption state on the first bandwidth unit and detect the paging early indication information, and resource overheads are reduced. In addition, the woken-up terminal device may detect the paging indication information on different bandwidth units. Therefore, a paging capacity is increased, and flexibility is improved.

With reference to the first aspect, in some implementations of the first aspect, the method further includes: sending the first paging early indication information on a second resource in the first bandwidth unit, where the first paging early indication information indicates the first terminal device to detect the paging indication information; and sending second paging early indication information on a third resource in the first bandwidth unit, where the second paging early indication information indicates a second terminal device to detect the paging indication information. A time domain resource included in the second resource is different from that included in the third resource, and/or a frequency domain resource included in the second resource is different from that included in the third resource.

According to the foregoing solution, the network device may wake up different terminal devices on the first bandwidth unit by using different paging early indication information, so that power consumption caused by waking up an unpaged terminal device can be reduced.

With reference to the first aspect, in some implementations of the first aspect, a paging resource used by the plurality of terminal devices to detect the paging indication information is in the first bandwidth unit, and the method further includes: sending first paging early indication information on the first bandwidth unit, where the first paging early indication information indicates at least one of the plurality of terminal devices to detect the paging indication information, and the at least one terminal device includes a first terminal device; sending first paging indication information on the first bandwidth unit, where the first paging indication information indicates a first resource, and the first resource is used to carry a paging message of the first terminal device; and sending the paging message of the first terminal device on the first resource in a second bandwidth unit.

According to the foregoing solution, the plurality of terminal devices detect the paging early indication information and the paging indication information on a first bandwidth unit including the synchronization reference signal, so that power consumption of the terminal devices can be reduced, resource overheads can be reduced, and resource utilization can be improved. The plurality of terminal devices receive a paging message on the plurality of bandwidth units, so that a paging capacity can be increased, to enable more terminal devices to initiate a paging process.

With reference to the first aspect, in some implementations of the first aspect, a time interval between the first resource and a paging resource used to carry the first paging indication information is greater than or equal to a first threshold, and the first threshold is related to duration needed for switching a bandwidth unit by the first terminal device.

According to the foregoing solution, an interval between the first paging indication information and a scheduled resource (namely, the first resource) is greater than the duration needed for switching the bandwidth unit by the first terminal device, so that the first terminal device has plenty of time to switch the bandwidth unit, to reduce a paging failure caused by switching the bandwidth unit by the first terminal device.

With reference to the first aspect, in some implementations of the first aspect, the first paging early indication information is a wake-up indication sequence corresponding to the first terminal device. Alternatively, the first paging early indication information includes a plurality of indication fields. The plurality of indication fields correspond to the plurality of terminal devices. One of the plurality of indication fields indicates a corresponding terminal device to detect or not to detect the paging indication information. The first terminal device corresponds to a first indication field in the plurality of indication fields. The first indication field indicates the first terminal device to detect the paging indication information.

According to the foregoing solution, the first paging early indication information may indicate, by using an indication sequence or an indication field of the first terminal device, that the first terminal device is woken up, so that when the first terminal device is paged, only the first terminal device is woken up. Therefore, a case that another terminal device that is not paged is woken up is avoided, and unnecessary power consumption of the another terminal device is reduced.

With reference to the first aspect, in some implementations of the first aspect, the plurality of terminal devices include a plurality of terminal device groups. A paging resource of one of the plurality of terminal device groups is in a same bandwidth unit, and paging resources of different terminal device groups are in different bandwidth units. A first terminal device group in the plurality of terminal device groups includes the first terminal device. The paging resource is used by the terminal device to detect the paging indication information. The first paging early indication information specifically indicates a terminal device in the first terminal device group to detect the paging early indication information.

According to the foregoing solution, at least one terminal device whose paging resource is in a same bandwidth unit is grouped into one terminal device group, and the first paging early indication information is used to wake up a terminal device group to which the first terminal device belongs, so that signaling overheads that is caused because each terminal device corresponds to a different wake-up indication sequence or wake-up indication field can be reduced.

With reference to the first aspect, in some implementations of the first aspect, the first paging early indication information is a wake-up indication sequence corresponding to the first terminal device group, or the first paging early indication information is a wake-up indication sequence corresponding to the second bandwidth unit, and a paging resource of the terminal device in the first terminal device group is in the second bandwidth unit.

With reference to the first aspect, in some implementations of the first aspect, the first paging early indication information includes the plurality of indication fields. The plurality of indication fields correspond to the plurality of bandwidth units. One of the plurality of indication fields indicates a terminal device group whose paging resource is in a bandwidth unit corresponding to the indication field to detect or not to detect the paging indication information. The second bandwidth unit corresponds to a second indication field in the plurality of indication fields. The second indication field indicates the first terminal device group whose paging resource is in the second bandwidth unit to detect the paging indication information. Alternatively, the plurality of indication fields correspond to the plurality of terminal device groups. One of the plurality of indication fields indicates a terminal device group corresponding to the indication field to detect or not to detect the paging indication information. The first terminal device corresponds to a third indication field in the plurality of indication fields. The third indication field indicates the terminal device in the first terminal device group to detect the paging indication information.

With reference to the first aspect, in some implementations of the first aspect, the first paging early indication information specifically indicates the plurality of terminal devices to detect the paging indication information.

With reference to the first aspect, in some implementations of the first aspect, the paging resource includes one or more of the following:

paging search space, a paging occasion resource, or a control resource set associated with paging search space.

According to a second aspect, a communication method is provided. The method may be performed by a terminal device or a module (for example, a chip) disposed in (or used in) a terminal device.

The method includes: A first terminal device receives first configuration information from a network device, where the first configuration information is used to configure the first terminal device to detect paging early indication information on a first bandwidth unit, and the paging early indication information indicates to detect or not to detect paging indication information; and the first terminal device receives a reference signal from the network device on the first bandwidth unit, where the reference signal is used by a plurality of terminal devices to perform time synchronization and/or frequency synchronization with the network device.

With reference to the second aspect, in some implementations of the second aspect, the method further includes: The first terminal device receives second configuration information from the network device. The second configuration information is used to configure a paging resource in a plurality of bandwidth units, and the paging resource is used by the terminal device to detect the paging indication information. The second configuration information includes a plurality of pieces of paging resource configuration information, and one of the plurality of pieces of paging resource configuration information is used to configure a paging resource in one of the plurality of bandwidth units. Alternatively, the second configuration information includes one piece of paging resource configuration information, and the one piece of paging resource configuration information is used to configure a paging resource in each of the plurality of bandwidth units.

With reference to the second aspect, in some implementations of the second aspect, the plurality of bandwidth units include the first bandwidth unit.

With reference to the second aspect, in some implementations of the second aspect, the method further includes: receiving fourth configuration information from the network device. The fourth configuration information is used to configure the plurality of bandwidth units. The plurality of bandwidth units are used by the terminal device to perform an initial access process. The fourth configuration information includes identification information of the plurality of bandwidth units. Identification information of one bandwidth unit includes first identification information and second identification information. The first identification information indicates that the bandwidth unit is a bandwidth unit used by the terminal device to perform the initial access process. The second identification information identifies one of the bandwidth units used by the terminal device to perform the initial access process.

With reference to the second aspect, in some implementations of the second aspect, the method further includes: The first terminal device determines, based on identification information of the first terminal device and a mapping rule, that a paging resource of the first terminal device is in a second bandwidth unit, where the mapping rule is used to represent a mapping relationship between identification information of a terminal device and a bandwidth unit; or the first terminal device receives resource indication information from the network device, where the resource indication information indicates that a paging resource of the first terminal device is in a second bandwidth unit. The paging resource is used by the first terminal device to detect the paging indication information.

With reference to the second aspect, in some implementations of the second aspect, the method further includes: The first terminal device receives first paging early indication information on the first bandwidth unit, where the first paging early indication information indicates the first terminal device to detect the paging indication information; and the first terminal device detects the paging indication information on the paging resource in the second bandwidth unit.

With reference to the second aspect, in some implementations of the second aspect, after the first terminal device receives the first paging early indication information on the first bandwidth unit, the method further includes: If the first paging early indication information indicates the first terminal device to detect the paging indication information, the first terminal device switches or readjusts an operating bandwidth unit from the first bandwidth unit to the second bandwidth unit.

With reference to the second aspect, in some implementations of the second aspect, the method further includes: If the first terminal device obtains no paging indication information through detection, or if the first terminal device obtains first paging indication information through detection and obtains no paging message of the first terminal device through detection on a first resource, the first terminal device switches or readjusts operating bandwidth from the second bandwidth unit to the first bandwidth unit, where the first paging indication information indicates a first resource; and the first terminal device detects the paging early indication information on the first bandwidth unit.

With reference to the second aspect, in some implementations of the second aspect, the method further includes: If the first terminal device obtains first paging indication information through detection, the first paging indication information indicates a first resource, and the first resource is used to carry a paging message of the first terminal device, the first terminal device receives the paging message on the first resource; and/or if the first terminal device obtains the first paging indication information through detection, and the first paging indication information indicates that system information is updated, the first terminal device receives system information.

With reference to the second aspect, in some implementations of the second aspect, the method further includes: If the first terminal device obtains first paging early indication information through detection on the first bandwidth unit, and the first paging early indication information indicates the first terminal device to detect the paging indication information, the first terminal device detects the paging indication information on the first bandwidth unit; and if the first terminal device obtains no paging indication information through detection, the first terminal device detects the paging early indication information on the first bandwidth unit; or if the first terminal device obtains first paging indication information through detection, the first paging indication information indicates a first resource, and the first resource is used to carry a paging message of the first terminal device, the first terminal device receives the paging message on the first resource in a second bandwidth unit.

With reference to the second aspect, in some implementations of the second aspect, that the first terminal device receives a paging message on the first resource in a second bandwidth unit includes: If the first terminal device obtains the first paging indication information through detection, the first terminal device switches or readjusts an operating bandwidth unit from the first bandwidth unit to the second bandwidth unit; and the first terminal device receives the paging message on the first resource in the second bandwidth unit.

With reference to the second aspect, in some implementations of the second aspect, a time interval between the first resource and a paging resource used to carry the first paging indication information is greater than or equal to a first threshold, and the first threshold is related to duration needed for switching a bandwidth unit by the first terminal device.

It should be noted that, for an indication manner of the first paging early indication information, refer to the descriptions in the first aspect. For brevity, details are not described herein again.

According to a third aspect, a communication apparatus is provided. The apparatus includes: a processing unit, configured to determine that a plurality of terminal devices detect paging early indication information on a first bandwidth unit, where the paging early indication information indicates to detect or not to detect paging indication information; and a transceiver unit, configured to send first configuration information to the plurality of terminal devices, where the first configuration information is used to configure the plurality of terminal devices to detect the paging early indication information on the first bandwidth unit. The transceiver unit is further configured to send a reference signal on the first bandwidth unit. The reference signal is used by the plurality of terminal devices to perform time synchronization and/or frequency synchronization with a network device.

With reference to the third aspect, in some implementations of the third aspect, paging resources used by at least two of the plurality of terminal devices to detect the paging indication information are in different bandwidth units.

With reference to the third aspect, in some implementations of the third aspect, the transceiver unit is further configured to send a plurality of pieces of second configuration information to the plurality of terminal devices. One of the plurality of pieces of second configuration information is used to configure a paging resource in one of a plurality of bandwidth units. Alternatively, the transceiver unit is further configured to send third configuration information to the plurality of terminal devices. The third configuration information is used to configure a paging resource in each of the plurality of bandwidth units.

With reference to the third aspect, in some implementations of the third aspect, the plurality of bandwidth units include the first bandwidth unit.

With reference to the third aspect, in some implementations of the third aspect, the transceiver unit is further configured to send fourth configuration information. The fourth configuration information is used to configure the plurality of bandwidth units. The plurality of bandwidth units are used by a terminal device to perform an initial access process. The fourth configuration information includes identification information of the plurality of bandwidth units. Identification information of one bandwidth unit includes first identification information and second identification information. The first identification information indicates that the bandwidth unit is a bandwidth unit used by the terminal device to perform the initial access process. The second identification information identifies one of the bandwidth units used by the terminal device to perform the initial access process.

With reference to the third aspect, in some implementations of the third aspect, the processing unit is further configured to determine, based on identification information of the plurality of terminal devices and a mapping rule, a bandwidth unit in which a paging resource of each of the plurality of terminal devices is located. The mapping rule is used to represent a mapping relationship between identification information of the terminal device and the bandwidth unit. Alternatively, the transceiver unit is further configured to send a plurality of pieces of resource indication information to the plurality of terminal devices. One piece of resource indication information indicates a bandwidth unit in which a paging resource of one of the plurality of terminal devices is located. The paging resource is used by the terminal device to detect the paging indication information.

With reference to the third aspect, in some implementations of the third aspect, a paging resource of a first terminal device is in a second bandwidth unit, and the transceiver unit is further configured to: send first paging early indication information on the first bandwidth unit, where the first paging early indication information indicates the first terminal device to detect the paging indication information; and send first paging indication information on the paging resource of the first terminal device in the second bandwidth unit, where the first paging indication information indicates a first resource, and the first resource is used to carry a paging message of the first terminal device; and/or the first paging indication information indicates that system information is updated.

With reference to the third aspect, in some implementations of the third aspect, the transceiver unit is further configured to: send the first paging early indication information on a second resource in the first bandwidth unit, where the first paging early indication information indicates the first terminal device to detect the paging indication information; and send second paging early indication information on a third resource in the first bandwidth unit, where the second paging early indication information indicates a second terminal device to detect the paging indication information. A time domain resource included in the second resource is different from that included in the third resource, and/or a frequency domain resource included in the second resource is different from that included in the third resource.

With reference to the third aspect, in some implementations of the third aspect, a paging resource used by the plurality of terminal devices to detect the paging indication information is in the first bandwidth unit, and the transceiver unit is further configured to: send first paging early indication information on the first bandwidth unit, where the first paging early indication information indicates at least one of the plurality of terminal devices to detect the paging indication information, and the at least one terminal device includes a first terminal device; send first paging indication information on the first bandwidth unit, where the first paging indication information indicates a first resource, and the first resource is used to carry a paging message of the first terminal device; and send the paging message of the first terminal device on the first resource in a second bandwidth unit.

With reference to the third aspect, in some implementations of the third aspect, a time interval between the first resource and a paging resource used to carry the first paging indication information is greater than or equal to a first threshold, and the first threshold is related to duration needed for switching a bandwidth unit by the first terminal device.

It should be noted that, for an indication manner of the first paging early indication information, refer to the descriptions in the first aspect. For brevity, details are not described herein again.

According to a fourth aspect, a communication apparatus is provided. The apparatus includes: a transceiver unit, configured to receive first configuration information from a network device, where the first configuration information is used to configure a first terminal device to detect paging early indication information on a first bandwidth unit, and the paging early indication information indicates to detect or not to detect paging indication information; and a processing unit, configured to receive a reference signal and detect the paging early indication information on the first bandwidth unit based on the first configuration information. The transceiver unit is further configured to receive a reference signal from the network device on the first bandwidth unit. The reference signal is used by a plurality of terminal devices to perform time synchronization and/or frequency synchronization with the network device.

With reference to the fourth aspect, in some implementations of the fourth aspect, the transceiver unit is further configured to receive second configuration information from the network device. The second configuration information is used to configure a paging resource in a plurality of bandwidth units, and the paging resource is used by a terminal device to detect the paging indication information. The second configuration information includes a plurality of pieces of paging resource configuration information, and one of the plurality of pieces of paging resource configuration information is used to configure a paging resource in one of the plurality of bandwidth units. Alternatively, the second configuration information includes one piece of paging resource configuration information, and the one piece of paging resource configuration information is used to configure a paging resource in each of the plurality of bandwidth units.

With reference to the fourth aspect, in some implementations of the fourth aspect, the plurality of bandwidth units include the first bandwidth unit.

With reference to the fourth aspect, in some implementations of the fourth aspect, the transceiver unit is further configured to receive fourth configuration information from the network device. The fourth configuration information is used to configure the plurality of bandwidth units. The plurality of bandwidth units are used by the terminal device to perform an initial access process. The fourth configuration information includes identification information of the plurality of bandwidth units. Identification information of one bandwidth unit includes first identification information and second identification information. The first identification information indicates that the bandwidth unit is a bandwidth unit used by the terminal device to perform the initial access process. The second identification information identifies one of the bandwidth units used by the terminal device to perform the initial access process.

With reference to the fourth aspect, in some implementations of the fourth aspect, the processing unit is further configured to determine, based on identification information of the first terminal device and a mapping rule, that a paging resource of the first terminal device is in a second bandwidth unit. The mapping rule is used to represent a mapping relationship between identification information of a terminal device and a bandwidth unit. Alternatively, the transceiver unit is further configured to receive resource indication information from the network device. The resource indication information indicates that a paging resource of the first terminal device is in a second bandwidth unit. The paging resource is used by the first terminal device to detect the paging indication information.

With reference to the fourth aspect, in some implementations of the fourth aspect, the transceiver unit is further configured to receive first paging early indication information in the first bandwidth unit, where the first paging early indication information indicates the first terminal device to detect the paging indication information; and the processing unit is further configured to detect the paging indication information on the paging resource in the second bandwidth unit.

With reference to the fourth aspect, in some implementations of the fourth aspect, after the transceiver unit receives the first paging early indication information on the first bandwidth unit, the processing unit is further configured to: when the first paging early indication information indicates the first terminal device to detect the paging indication information, the first terminal device switches or readjusts an operating bandwidth unit from the first bandwidth unit to the second bandwidth unit.

With reference to the fourth aspect, in some implementations of the fourth aspect, the processing unit is specifically configured to: when the first terminal device obtains no paging indication information through detection, or when the first terminal device obtains first paging indication information through detection and obtains no paging message of the first terminal device through detection on a first resource, switch or readjust working bandwidth from the second bandwidth unit to the first bandwidth unit. The first paging indication information indicates the first resource. The first terminal device detects the paging early indication information on the first bandwidth unit.

With reference to the fourth aspect, in some implementations of the fourth aspect, the transceiver unit is specifically configured to: when the first terminal device obtains first paging indication information through detection, and the first paging indication information indicates a first resource, receive a paging message on the first resource, where the first resource is used to carry the paging message of the first terminal device; and/or the transceiver unit is further configured to: when the first terminal device obtains the first paging indication information through detection, and the first paging indication information indicates that system information is updated, receive system information.

With reference to the fourth aspect, in some implementations of the fourth aspect, the processing unit is further configured to: when the first terminal device obtains first paging early indication information through detection on the first bandwidth unit, and the first paging early indication information indicates the first terminal device to detect the paging indication information, detect the paging indication information on the first bandwidth unit. The processing unit is further configured to: when the first terminal device obtains no paging indication information through detection, detect the paging early indication information on the first bandwidth unit. Alternatively, the processing unit is further configured to: when the first terminal device obtains first paging indication information through detection, the first paging indication information indicates a first resource, and the first resource is used to carry a paging message of the first terminal device, the transceiver unit is further configured to receive the paging message on the first resource in a second bandwidth unit.

With reference to the fourth aspect, in some implementations of the fourth aspect, the processing unit is specifically configured to: when the first terminal device obtains the first paging indication information through detection, switch or readjust an operating bandwidth unit from the first bandwidth unit to the second bandwidth unit. The transceiver unit is further configured to receive the paging message on the first resource in the second bandwidth unit.

It should be noted that, for an indication manner of the first paging early indication information, refer to the descriptions in the first aspect. For brevity, details are not described herein again.

According to a fifth aspect, a communication apparatus is provided, and includes a processor. The processor may implement the method according to any one of the first aspect and the possible implementations of the first aspect. Optionally, the communication apparatus further includes a storage medium. The processor is coupled to the storage medium, and may be configured to execute instructions in the storage medium, to implement the method according to any one of the first aspect and the possible implementations of the first aspect. Optionally, the communication apparatus further includes a communication interface, and the processor is coupled to the communication interface. In this embodiment of this application, the communication interface may be a transceiver, a pin, a circuit, a bus, a module, or a communication interface of another type. This is not limited.

In an implementation, the communication apparatus is a network device. When the communication apparatus is the network device, the communication interface may be the transceiver or an input/output interface.

In another implementation, the communication apparatus is a chip disposed in a network device. When the communication apparatus is the chip disposed in the network device, the communication interface may be an input/output interface, and the processor may be a logic circuit.

Optionally, the transceiver may be a transceiver circuit. Optionally, the input/output interface may be an input/output circuit.

According to a sixth aspect, a communication apparatus is provided, and includes a processor. The processor may implement the method according to any one of the first aspect and the possible implementations of the first aspect. Optionally, the communication apparatus further includes a storage medium. The processor is coupled to the storage medium, and may be configured to execute instructions in the storage medium, to implement the method according to any one of the first aspect and the possible implementations of the first aspect. Optionally, the communication apparatus further includes a communication interface, and the processor is coupled to the communication interface. In this embodiment of this application, the communication interface may be a transceiver, a pin, a circuit, a bus, a module, or a communication interface of another type. This is not limited.

In an implementation, the communication apparatus is a terminal device. When the communication apparatus is the terminal device, the communication interface may be the transceiver or an input/output interface.

In another implementation, the communication apparatus is a chip disposed in a terminal device. When the communication apparatus is the chip disposed in the terminal device, the communication interface may be an input/output interface, and the processor may be a logic circuit.

Optionally, the transceiver may be a transceiver circuit. Optionally, the input/output interface may be an input/output circuit.

According to a seventh aspect, a processor is provided, and includes an input circuit, an output circuit, and a processing circuit. The processing circuit is configured to receive a signal through the input circuit, and transmit a signal through the output circuit, to enable the processor to perform the method according to any one of the first aspect or the second aspect and the possible implementations of the first aspect or the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in this embodiment of this application.

According to an eighth aspect, a computer program product is provided. The computer program product includes a computer program (which may also be referred to as code or instructions). When the computer program is run, a computer is enabled to perform the method according to any one of the first aspect or the second aspect and the possible implementations of the first aspect or the second aspect.

According to a ninth aspect, a computer-readable storage medium is provided. The computer-readable storage medium stores a computer program (which may also be referred to as code or instructions). When the computer program is run on a computer, the computer is enabled to perform the method according to any one of the first aspect or the second aspect and the possible implementations of the first aspect or the second aspect.

According to a tenth aspect, a communication system is provided, and includes the foregoing at least one network device and the foregoing at least one terminal device.

## BRIEF DESCRIPTION OF DRAWINGS

FIG. 1 is a schematic diagram of an architecture of a communication system to which an embodiment of this application is applicable;
FIG. 2 is a schematic flowchart of a communication method according to an embodiment of this application;
FIG. 3 is another schematic diagram of a communication method according to an embodiment of this application;
FIG. 4 is a schematic diagram of indicating a PO resource by a PEI according to an embodiment of this application;
FIG. 5 is a schematic diagram of first paging early indication information according to an embodiment of this application;
FIG. 6 is another schematic diagram of indicating a PO resource by a PEI according to an embodiment of this application;
FIG. 7 is still another schematic flowchart of a communication method according to an embodiment of this application;
FIG. 8 is a schematic diagram of a PEI and a PO resource in a same bandwidth unit according to an embodiment of this application;
FIG. 9 is a schematic block diagram of a communication apparatus according to an embodiment of this application;
FIG. 10 is a schematic diagram of a structure of a terminal device according to an embodiment of this application; and
FIG. 11 is a schematic diagram of a structure of a network device according to an embodiment of this application.

## DESCRIPTION OF EMBODIMENTS

The following describes technical solutions of this application with reference to the accompanying drawings.

To make the objectives, technical solutions, and advantages of embodiments of this application clearer, the following clearly and completely describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

In the specification, claims, and accompanying drawings of embodiments of this application, the terms "first", "second", and the like are intended to distinguish between similar objects but do not necessarily indicate a specific order or sequence. It should be understood that the data termed in such a way is interchangeable in proper circumstances, so that embodiments of this application described herein can be implemented in other orders than the order illustrated or described herein. In addition, the terms "include" and "have" and any other variants are intended to cover non-exclusive inclusion. For example, a process, method, system, product, or device that includes a list of steps or units is not necessarily limited to those expressly listed steps or units, but may include other steps or units not expressly listed or inherent to such a process, method, product, or device.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), and a future communication system, for example, a sixth generation mobile communication system. This is not limited in this application.

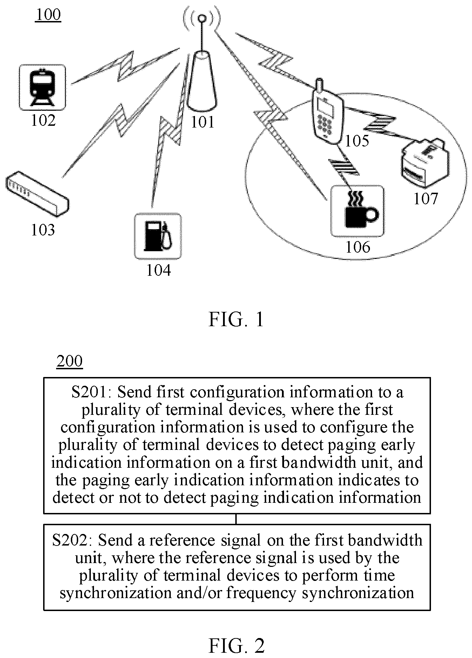

FIG. 1 is a schematic diagram of a structure of a communication system to which this application is applicable.

As shown in FIG. 1, the communication system 100 may include at least one network device, for example, a network device 101 in FIG. 1. The communication system 100 may further include at least one terminal device, such as terminal devices 102 to 107 in FIG. 1. The terminal devices 102 to 107 may be mobile or fixed. The network device 101 may communicate with one or more of the terminal devices 102 to 107 by using a radio link. The network device may communicate with the terminal device by using a communication method provided in embodiments of this application.

The terminal device in embodiments of this application may also be referred to as user equipment (user equipment, UE), an access terminal, a user unit, a user station, a mobile station, a remote station, a remote terminal, a mobile device, a user terminal, a terminal, a wireless communication device, a user agent, or a user apparatus. The terminal device in embodiments of this application may be a mobile phone, a tablet computer, a computer having a wireless transceiver function, a virtual reality (virtual reality, VR) terminal device, an augmented reality (augmented reality, AR) terminal device, a wireless terminal in industrial control, a wireless terminal in self driving, a wireless terminal in telemedicine, a wireless terminal in a smart grid, a wireless terminal in transportation security, a wireless terminal in a smart city, a wireless terminal in a smart home, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, a vehicle-mounted device, a wearable device, a terminal device in a 5G network, a terminal device in a future evolved public land mobile network (public land mobile network, PLMN), or the like. It should be understood that a specific form of the terminal device is not limited in this application.

The network device in embodiments of this application may be a device having a wireless transceiver function in an access network. The device includes but is not limited to: a base station, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, WI-FI) system, a wireless relay node, a wireless backhaul node, a transmission point (transmission point, TP), a transmission and reception point (transmission and reception point, TRP), or the like. Alternatively, the device may be a network node that forms a gNB or a transmission point, for example, a baseband unit (BBU) or a distributed unit (distributed unit, DU). It should be understood that a specific form of the network device is not limited in this application.

The following describes related technologies and terms in embodiments of this application.

1. Reduced capability (reduced capability, REDCAP) terminal device

The REDCAP terminal device has higher requirements on costs and power consumption. The REDCAP terminal device is a type of terminal device whose capability is lower than that of a terminal device that currently supports service types such as enhanced mobile broadband (enhanced mobile broadband, eMBB) and ultra-reliable and low latency communication (ultra-reliable and low latency communication, URLLC). The REDCAP terminal device may be used in a massive machine type communication (massive machine type communication, mMTC) scenario. A main feature of the REDCAP terminal device is to meet a high energy saving requirement of the terminal device by reducing or limiting a capability of the terminal device. For example, a bandwidth capability of the REDCAP terminal device is lower than that of a terminal device that supports the eMBB service. For example, a maximum bandwidth part (bandwidth part, BWP) supported by the REDCAP terminal device is reduced to 20 megahertz (megahertz, MHz) or 10 MHz. For another example, a signal processing capability (processing capability), a relaxed processing delay requirement (processing time), and/or a reduced antenna capability of the REDCAP terminal device are lower than those of another type of terminal device. Compared with implementation specification of another type of terminal device, implementation specification of the REDCAP terminal device is reduced. This further reduces implementation costs, helps expand a market of machine-type terminal devices, and promotes development of the internet of things.

A terminal device in embodiments of this application may be the REDCAP terminal device. However, this application is not limited thereto. The terminal device in embodiments of this application may alternatively be another type of terminal device.

2. Paging process

When a network device needs to page a terminal device, the network device may send, to the terminal device, downlink control information (downlink control information, DCI) scrambled by using a paging-radio network temporary identifier (paging-radio network temporary identifier, P-RNTI). The DCI may be briefly referred to as paging DCI (paging DCI). The DCI is used to schedule a physical downlink shared channel (physical downlink shared channel, PDSCH) used to carry a paging message, and send the paging message on the PDSCH. When being in a radio resource control (radio resource control, RRC) idle state and an RRC inactive state, the terminal device monitors the paging DCI by using a discontinuous reception (discontinuous reception, DRX) mechanism. To be specific, the terminal device monitors, on a PO resource within DRX active time, whether the network device sends the paging DCI, and enters a sleep state in DRX inactive time. The terminal device monitors one PO resource in each paging cycle. One PO resource includes a physical downlink control channel (physical downlink control channel, PDCCH) monitoring occasion (monitoring occasion, MO) set used to carry the paging DCI. The set includes a plurality of time intervals at which a PDCCH can be sent or received. For example, a time interval may be a subframe, an OFDM symbol, or the like.

One PO resource may correspond to a plurality of terminal devices. In other words, the plurality of terminal devices may monitor a same PO resource, and paging messages of the plurality of terminal devices are carried on a PDSCH scheduled by using the paging DCI. The terminal device, by receiving the PDSCH, determines whether the PDSCH includes a paging message that carries identification information of the terminal device, and determines whether the terminal device is paged by the network device.

The paging process may alternatively be used for updating system information (system information, SI). For example, a network device may indicate, in paging DCI, whether system information of a network is updated. If the paging DCI indicates that the system information is updated, a terminal device may receive updated system information based on an indication, including a system information block 1 (SI block, SIB 1), other SI, and the like. If the paging DCI only indicates that the system information is updated, and does not indicate scheduling information of a paging message, the terminal does not need to receive a PDSCH that carries the paging message. If the paging DCI indicates that system information is updated and scheduling information of a paging message, the terminal receives a PDSCH that carries the paging message, and needs to receive updated system information.

According to a current protocol, PDCCH and PDSCH transmission related to the paging procedure can be performed only within an initial downlink BWP (initial downlink BWP). Maximum bandwidth of the initial downlink BWP does not exceed 20 MHz. To increase a paging capacity, the network may configure a plurality of initial downlink BWPs, and configure a paging resource on the plurality of initial downlink BWPs. The paging resource may include paging search space (search space) and/or a PO resource. A terminal device in the network may monitor a paging occasion on different initial downlink BWPs. The paging search space is associated with a PDCCH, and the terminal device detects the paging DCI within the paging search space.

The terminal device needs to maintain time synchronization and/or frequency synchronization with the network device to improve paging DCI detection performance. The terminal device may detect a reference signal sent by the network device for synchronization to perform synchronization. For example, the reference signal may be a synchronization signal (synchronization signal, SS) and physical broadcast channel (physical broadcast channel, PBCH) block (SS/PBCH block, SSB), or another reference signal.

Because the terminal device cannot determine whether a corresponding PO resource carries the paging DCI when monitoring the PO resource, energy waste may be caused when the terminal device detects the paging DCI by monitoring the PO resource. Therefore, a wake-up signal (wake-up signal, WUS) may be introduced for energy saving of the terminal device. The WUS signal indicates whether to wake up the terminal device to monitor the PO resource. When the WUS indicates not to wake up the terminal device, the terminal device may enter a sleep state to save energy. For example, the network device does not send the WUS on a resource carrying the WUS, and the terminal device obtains no WUS through detection on the resource carrying the WUS. In this case, the terminal device determines that the terminal device is not woken up. Alternatively, the network device sends, on a resource carrying the WUS, the WUS signal indicating not to wake up the terminal device (or the WUS signal indicating not to wake up the terminal device may be referred to as sleep indication information). After obtaining the WUS signal through detection, the terminal device determines the terminal device is not woken up. A sequence of the WUS that indicates to wake up the terminal device may be different from that of the WUS that indicates not to wake up the terminal device. However, this application is not limited thereto. When the WUS indicates to wake up the terminal device, the terminal device monitors the PO resource. For example, when the network device sends, on the resource carrying the WUS, the WUS indicates to wake up the terminal device, the terminal device determines to be woken up.

In another implementation, the network device may indicate, by sending sleep indication information indicating the terminal device to enter a sleep state (go to sleep, GTS), the terminal device to enter the sleep state or be woken up. For example, if obtaining the sleep indication information through detection on a resource carrying the sleep indication information, the terminal device determines that the terminal device enters the sleep state, or is not woken up. If obtaining no sleep indication information through detection on a resource carrying the sleep indication information, the terminal device determines to be woken up.

Because detection complexity of the WUS and detection complexity of the sleep indication information are low, for example, the WUS and the sleep indication information each are a sequence, and can be detected through sequence correlation detection, energy consumed by the terminal device to detect the WUS and the sleep indication information is lower than that consumed by the terminal device to detect the paging DCI. Therefore, an objective of saving energy of the terminal can be achieved.

In embodiments of this application, indication information indicates to detect or not to detect paging indication information may be referred to as paging early indication (paging early indication, PEI) information. For example, the PEI may be the WUS and/or the GTS. This application is not limited thereto. The PEI in embodiments of this application may alternatively be other indication information indicating to detect or not to detect the paging indication information.

If an initial downlink BWP used by the terminal device to monitor the PEI does not include a synchronization reference signal, the terminal device needs to switch to a BWP including the synchronization reference signal to perform time synchronization calibration and/or frequency synchronization calibration, and then switches back to the initial downlink BWP used to monitor the PEI, to monitor the PEI. In this case, when being not paged, the terminal device further needs to consume energy to perform bandwidth switching to obtain synchronization with the network device. This application proposes that the network device may configure the wake-up signal of the terminal device in the BWP including the synchronization reference signal. In this way, the terminal device can perform synchronization calibration with the network device and detect the wake-up signal without bandwidth switching, to maintain low power consumption when the terminal device is not paged.

The following describes a communication method in embodiments of this application with reference to the accompanying drawings.

**Embodiment 1**

FIG. 2 is a schematic flowchart of a communication method 200 according to an embodiment of this application.

S201: A network device sends first configuration information to a plurality of terminal devices, where the first configuration information is used to configure the plurality of terminal devices to detect paging early indication information on a first bandwidth unit, and the paging early indication information indicates to detect or not to detect paging indication information.

Correspondingly, the plurality of terminal devices receive the first configuration information from the network device, and determine, based on an indication of the first configuration information, to detect the paging early indication information on the first bandwidth unit.

The first bandwidth unit includes a reference signal resource used to carry a reference signal. The reference signal is used by a terminal device to perform time synchronization and/or frequency synchronization with the network device. In other words, the network device configures the terminal device to detect the paging early indication information on the first bandwidth unit including the reference signal resource. In this way, the terminal device can perform time synchronization and/or frequency synchronization with the network device and detect the paging early indication information without bandwidth switching, to maintain low power consumption when the terminal device is not paged.

In an implementation, the network device may send a plurality of pieces of first configuration information to the plurality of terminal devices. One piece of first configuration information specifically indicates one of the plurality of terminal devices to detect first indication information on the first bandwidth unit.

In other words, the first configuration information may be terminal device-specific (UE-specific) configuration information, and the network device separately sends the first configuration information to each of the plurality of terminal devices. In this way, each terminal device determines, based on the received first configuration information specific to the terminal device, to detect the paging early indication information on the first bandwidth unit.

In another implementation, the network device sends one piece of first configuration information to the plurality of terminal devices. The first configuration information specifically indicates the plurality of terminal devices to detect first indication information on the first bandwidth unit.

In other words, the first configuration information may be common configuration information of the plurality of terminal devices. The network device sends the common first configuration information, so that the plurality of terminal devices determine, based on the common first configuration information, to detect the paging early indication information on the first bandwidth unit.

In this application, bandwidth units (including the first bandwidth unit) are continuous frequency resources. By way of example, and not limitation, the first bandwidth unit is a BWP or a narrow band (narrow band).

Optionally, the first bandwidth unit is one of at least one initial bandwidth unit of the network device, for example, an initial BWP.

The initial bandwidth unit may be a bandwidth unit used by the terminal device to perform an initial access process, or the initial bandwidth unit may be used for data transmission of a terminal device in an RRC connected or inactive state. However, this application is not limited thereto.

The following describes a manner in which the network device and the terminal device determine a paging resource used by the terminal device to detect the paging indication information.

In an implementation, the network device may include a plurality of initial bandwidth units configured with a paging resource. The network device and the terminal device each may determine, based on identification information of the plurality of terminal devices and a mapping rule, a bandwidth unit in which a paging resource of each of the plurality of terminal devices is located. The mapping rule is used to represent a mapping relationship between identification information of the terminal device and the bandwidth unit.

For example, the network device includes L initial downlink bandwidth units configured with a paging resource. The network device and one terminal device determine K based on a mapping rule shown in the following formula, where K indicates that a paging resource of the terminal device is in a $K^{th}$ bandwidth unit in the L initial downlink bandwidth units, and K is less than or equal to L.

$$K = ID_{UE} \bmod L,$$

where
$ID_{UE}$ is identification information of the terminal device.

For example, the network device includes two initial downlink BWPs configured with paging resources. In other words, L is equal to 2. The two BWPs are respectively {BWP#0, BWP#1}. If identification information of eight UEs is respectively {0, 1, 2, 3, 4, 5, 6, 7}, the network device and terminal devices may determine that paging resources of terminal devices whose identification information is {0, 2, 4, 6} are on the BWP#0, and paging resources of terminal devices whose identification information is {1, 3, 5, 7} are on the BWP#1.

For another example, if numbers of identification information of initial downlink BWPs that are configured with paging resources and that are included in the network device are not consecutive, the identification information of the initial downlink BWPs configured with the paging resources may be sorted based on a number value. For example, the terminal device and the network device each may sort the BWPs in ascending order of the identification information of the BWPs, and determine, based on sequence numbers obtained by sorting the BWPs, a BWP in which the paging resource of the terminal device is located. For example, the network device includes two BWPs configured with paging resources. The two BWPs are respectively {BWP #0, BWP #2}. If the BWPs are sorted based on identification information of the BWPs, a sequence number of the BWP #0 is 0, and a sequence number of the BWP #2 is 1. If identification information of eight UEs is respectively {0, 1, 2, 3, 4, 5, 6, 7}, according to the foregoing formula, paging resources of terminal devices whose identification information is {0, 2, 4, 6} are on the BWP #1 whose sequence number is 0, and paging resources of terminal device whose identification information is {1, 3, 5, 7} are on the BWP #2 whose sequence number is 1.

By way of example, and not limitation, the identification information of the terminal device may be identification information predefined or configured by a network for the terminal device.

For example, the identification information of the terminal device may be an international mobile subscriber identity (international mobile subscriber identity, IMSI), a temporary mobile subscriber identity (temporary mobile subscriber identity, TMSI), or a cell radio network temporary identifier (cell-Radio network temporary identifier, C-RNTI).

In another implementation, the network device sends a plurality of pieces of resource indication information to the plurality of terminal devices. One piece of resource indication information indicates a bandwidth unit in which a paging resource of one of the plurality of terminal devices is located.

Correspondingly, each of the plurality of terminal devices receives the resource indication information from the network device, and determines, based on the resource indication information, the bandwidth unit in which the paging resource is located.

By way of example, and not limitation, the resource indication information may be carried in an RRC message, a medium access control (medium access control, MAC) control element (control element, CE), or DCI.

For example, for the terminal device in the RRC connected state or the RRC inactive state, the network device may include the resource indication information by using the RRC message (for example, an RRC reconfiguration message), to indicate an initial downlink bandwidth unit in which a paging resource used by the terminal device to detect the paging indication information is located.

For another example, the network device may include the resource indication information by using an RRC release message, to indicate an initial downlink bandwidth unit in which a paging resource used by the terminal device in an RRC idle state or the RRC inactive state to detect the paging indication information is located.

For another example, for a terminal device that is in an RRC idle state or the RRC inactive state and that supports small data (small data) transmission, the network device may include the resource indication information by using the DCI, the MAC CE, or a PDSCH, to notify the terminal device of an initial downlink bandwidth unit in which a paging resource used to detect the paging indication information is located.

By way of example, and not limitation, the paging resource includes one or more of the following:
paging search space (paging search space), a paging occasion PO resource, or a control resource set (control resource set, CORESET) associated with paging search space.

Optionally, paging resources used by at least two of the plurality of terminal devices to detect the paging indication information are in different bandwidth units.

In addition to configuring the plurality of terminal devices to detect the paging early indication information on the first bandwidth unit, the network device further configures the paging resource used by the terminal device to detect the paging indication information. The paging resources corresponding to at least two of the plurality of terminal devices may be in different bandwidth units. The network device configures a plurality of terminal devices whose paging resources are not in a same bandwidth unit to detect the paging early indication information in the first bandwidth unit. The first bandwidth unit includes a reference signal used for synchronization. In this way, the plurality of terminal devices camp on one bandwidth unit to receive the reference signal to perform synchronization, and determine, by detecting the paging early indication information, whether to be woken up to detect the paging indication information. This can reduce resource overheads caused by the network device sending the reference signal to the plurality of terminal devices on a plurality of bandwidth units and paging early indication information detection, and improve resource utilization. When the paging early indication information indicates to detect the paging indication information, the terminal device may detect the paging indication information on a corresponding paging resource.

Optionally, a paging resource used by the plurality of terminal devices to detect the paging indication information is in the first bandwidth unit. If obtaining, through detection, the paging early indication information that indicates to detect the paging indication information, the terminal device detects the paging indication information on the paging resource in the first bandwidth unit. Optionally, the terminal device in the plurality of terminal devices may receive, on a bandwidth unit other than the first bandwidth unit, a PDSCH used to carry a paging message.

For example, the plurality of terminal devices may determine, based on the identification information of the terminal device or based on second indication information, that the paging resource is in the first bandwidth unit, and the plurality of terminal devices whose paging resource is in the first bandwidth unit detect the paging early indication information on the first bandwidth unit. However, this application is not limited thereto.

By way of example, and not limitation, the paging indication information in this embodiment of this application may be paging DCI (paging DCI).

The paging DCI is DCI in which cyclic redundancy check (cyclic redundancy check, CRC) is scrambled by using a paging-radio network temporary identifier (paging-radio network temporary indication, P-RNTI), and the paging DCI may include one or more of the following purposes:
used to schedule a paging message, used to indicate that system information is updated, or used to schedule user service data transmission.

S202: The network device sends the reference signal on the first bandwidth unit, where the reference signal is used by the plurality of terminal devices to perform time synchronization and/or frequency synchronization.

The plurality of terminal devices detect the paging early indication information on the first bandwidth unit based on the first configuration information, and the plurality of terminal devices may receive the reference signal from the network device on the first bandwidth unit, to perform time synchronization and/or frequency synchronization or perform time synchronization calibration and/or frequency synchronization calibration based on the reference signal.

By way of example, and not limitation, one or more of the plurality of terminal devices may be in the RRC idle state or the RRC inactive state.

According to the solutions in Embodiment 1 of this application, the network device configures the plurality of terminal devices to detect the paging early indication information on the first bandwidth unit including the reference signal resource. In this way, the terminal device can perform time synchronization and/or frequency synchronization with the network device and detect the paging early indication information without bandwidth switching, to maintain low power consumption when the terminal device is not paged.

## Embodiment 2

In Embodiment 2, paging resources used by at least two of a plurality of terminal devices to detect paging indication information are in different bandwidth units. Embodiment 2 may be implemented in combination with Embodiment 1. The plurality of terminal devices determine, based on first configuration information, to detect paging early indication information on the first bandwidth unit.

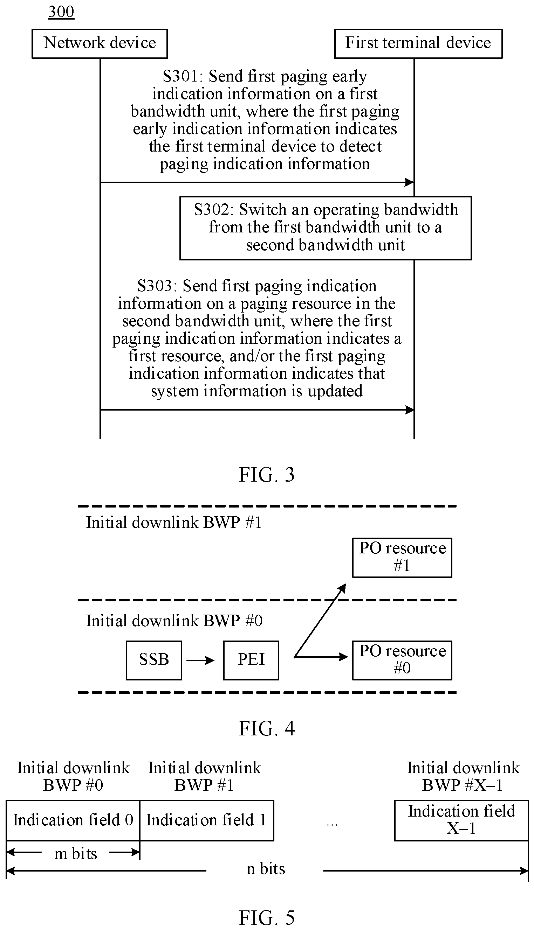

FIG. 3 is a schematic flowchart according to Embodiment 2 of this application.

S301: A network device sends first paging early indication information on a first bandwidth unit, where the first paging early indication information indicates a first terminal device to detect paging indication information.

A plurality of terminal devices detect paging early indication information from the network device on the first bandwidth unit. The plurality of terminal devices include the first terminal device. When determining that the network device needs to page the first terminal device or the network device needs to notify the first terminal device that system information is updated, the network device sends the first paging early indication information on the first bandwidth unit. Correspondingly, after receiving the first paging early indication information, the first terminal device determines to be woken up to detect the paging indication information.

The following describes specific implementations in which the first paging early indication information indicates the first terminal device to detect the paging indication information. The implementations may include but are not limited to the following implementations.

Implementation 1: The first paging early indication information specifically indicates the plurality of terminal devices that detect the paging early indication information on the first bandwidth unit to detect the paging indication information.

When determining to page at least one of the plurality of terminal devices, the network device sends the first paging early indication information on the first bandwidth unit, to wake up the plurality of terminal devices to detect the paging indication information. After obtaining the paging early indication information through detection, the plurality of terminal devices determine to be woken up, to detect the paging indication information. In this case, the plurality of terminal devices detect the paging early indication information on respective corresponding paging resources.

For example, as shown in FIG. 4, the network device configures, by using first configuration information, the plurality of terminal devices to detect the paging early indication information on an initial downlink BWP #0 (which is an example of the first bandwidth unit). The initial downlink BWP #0 includes an SSB resource. The plurality of terminal devices may receive an SSB on the SSB resource, and perform time synchronization and/or frequency synchronization with the network device based on the SSB. After determining to page the first terminal device, the network device sends a PEI (which is an example of the first paging early indication information) on the initial downlink BWP #0. In the plurality of terminal devices, a paging resource of the first terminal device, for example, a PO resource 1, is in an initial downlink BWP #1, and a paging resource of a second terminal device, for example, a PO resource 0, is in the initial downlink BWP #0. In this case, the first terminal device detects the paging indication information on the initial downlink BWP #1 after receiving the PEI, and the second terminal device detects the paging indication information on the initial downlink BWP #0 after receiving the PEI.

Implementation 2: The first paging early indication information includes a plurality of indication fields. The plurality of indication fields correspond to the plurality of terminal devices. One of the plurality of indication fields indicates a corresponding terminal device to detect or not to detect the paging indication information. The first terminal device corresponds to a first indication field in the plurality of indication fields. The first indication field indicates the first terminal device to detect the paging indication information.

For example, the first paging early indication information is common information of the plurality of terminal devices, and includes one bit string (or referred to as a bitmap (bitmap)). A quantity of bits included in the bit string is greater than or equal to a quantity of the plurality of terminal devices, and each of the plurality of terminal devices corresponds to one bit in the bit string. That a bit in the bit string is set to "1" indicates that a terminal device corresponding to the bit detects the paging indication information; and "0" indicates that the terminal device corresponding to the bit does not detect the paging indication information. In the first paging early indication information, a bit corresponding to the first terminal device is set to " 1". After receiving the first paging early indication information, the first terminal device determines to be woken up to detect the paging indication information. Another terminal device determines, based on an indication of a corresponding bit in the first paging early indication information, whether to be woken up to detect the paging early indication information.

Implementation 3: The plurality of terminal devices include a plurality of terminal device groups. A paging resource of one of the plurality of terminal device groups is in a same bandwidth unit, and paging resources of different terminal device groups are in different bandwidth units. A first terminal device group in the plurality of terminal device groups includes the first terminal device. The paging resource is used by a terminal device to detect the paging indication information. The first paging early indication information specifically indicates a terminal device in the first terminal device group to detect the paging early indication information.

In an example, the first paging early indication information includes a plurality of indication fields. The plurality of indication fields correspond to a plurality of bandwidth units. One of the plurality of indication fields indicates a terminal device group whose paging resource is in a bandwidth unit corresponding to the indication field to detect or not to detect the paging indication information. A second bandwidth unit corresponds to a second indication field in the plurality of indication fields. The second indication field indicates the first terminal device group whose paging resource is in the second bandwidth unit to detect the paging indication information.

For example, one of the plurality of indication fields includes at least one bit. The indication field indicates, by using the at least one bit, a terminal device group whose paging resource is in a bandwidth unit corresponding to the indication field to detect or not to detect the paging indication information. For example, the paging resource of the first terminal device group is in the second bandwidth unit, and the second indication field corresponding to the second bandwidth unit includes at least one bit. If the at least one bit indicates to detect the paging indication information, each terminal device in the first terminal device group detects the paging early indication information on the second bandwidth unit after obtaining the first paging early indication information through detection on the first bandwidth unit.

Optionally, one indication field in the first paging early indication information includes one bit string. One bit in the bit string indicates one or more terminal devices to detect or not to detect the paging indication information. The terminal devices each are a terminal device whose paging resource is in a bandwidth unit corresponding to the indication field.

For example, a plurality of terminal devices whose paging resource is in one bandwidth unit are further divided into a plurality of terminal device groups, and each terminal device group includes at least one terminal device. Each terminal device group corresponds to one bit in an indication field corresponding to the bandwidth unit in the first paging early indication information. One bit in one indication field indicates a terminal device in a corresponding terminal device group to detect or not to detect the paging indication information.

For another example, one indication field in the first paging early indication information includes one bit string. One bit in the bit string indicates one terminal device to detect or not to detect the paging indication information, and a paging resource of the terminal device is in a bandwidth unit corresponding to the bit field. For example, the network device includes X initial downlink BWPs in total, from an initial downlink BWP #0 to an initial downlink BWP #X-1. The first paging early indication information includes n bits, every m bits of the n bits are one indication field, and there are X indication fields in total. The X indication fields each correspond to one initial downlink BWP. As shown in FIG. 5, an indication field 0 is used as an example. The indication field 0 corresponds to the initial downlink BWP #0, and one terminal device whose paging resource is in the initial downlink BWP #0 corresponds to one of m bits in the indication field 0. The bit indicates the terminal device to detect or not to detect the paging indication information. For example, a paging resource of the first terminal device is in the initial downlink BWP #1 (which is an example of the second bandwidth unit), and the first terminal device corresponds to a third bit in an indication field 1. In this case, after receiving the first paging early indication information, the first terminal device determines that the third bit in the indication field 1 indicates to detect the paging indication information, and the first terminal device detects the paging indication information on the initial downlink BWP #1.

In another example, the first paging early indication information includes a plurality of indication fields. The plurality of indication fields correspond to the plurality of terminal device groups, and the plurality of indication fields correspond to the plurality of terminal device groups. One of the plurality of indication fields indicates a terminal device group corresponding to the indication field to detect or not to detect the paging indication information. The first terminal device corresponds to a third indication field in the plurality of indication fields. The third indication field indicates the terminal device in the first terminal device group to detect the paging indication information.

Optionally, one indication field in the first paging early indication information includes one bit string. One bit in the bit string indicates one or more terminal devices to detect or not to detect the paging indication information. The terminal devices each are one terminal device in the terminal device group corresponding to the indication field.

By way of example, and not limitation, when including the plurality of indication fields, the first paging early indication information may be DCI, or the first paging early indication information is referred to as a DCI-based PEI.

In another example, the first paging early indication information is a wake-up indication sequence corresponding to the first terminal device group, or the first paging early indication information is a wake-up indication sequence corresponding to the second bandwidth unit. A paging resource of the terminal device in the first terminal device group is in the second bandwidth unit.

For example, when the network device determines to page a first terminal device in the first terminal device group, if the network device determines that the first terminal device belongs to the first terminal device group, the network device sends, on the first bandwidth unit, the wake-up indication sequence corresponding to the first terminal device group. After receiving the wake-up indication sequence, the terminal device in the first terminal device group detects the paging indication information on the second bandwidth unit.

For another example, when the network device determines to page the first terminal device, if the network device determines that the paging resource of the first terminal device is in the second bandwidth unit, the network device sends, on the first bandwidth unit, the wake-up indication sequence corresponding to the second bandwidth unit. After obtaining the wake-up indication sequence through detection, the terminal device in the first terminal device group detects the paging indication information on the paging resource in the second bandwidth unit.

Optionally, a resource for detecting the paging early indication information by the first terminal device on the first bandwidth unit is different from a resource for detecting the paging early indication information by the second terminal device.

The network device determines to page the first terminal device and the second terminal device. The network device sends the first paging early indication information on a second resource in the first bandwidth unit. The first paging early indication information indicates the first terminal device to detect the paging indication information. The network device sends second paging early indication information on a third resource in the first bandwidth unit. The second paging early indication information indicates the second terminal device to detect the paging indication information. A time domain resource included in the second resource is different from that included in the third resource (for example, that the time domain resources are different may mean partially or completely non-overlapping in time domain), and/or a frequency domain resource included in the second resource is different from that included in the third resource (for example, that the frequency domain resources are different may mean partially or completely non-overlapping in frequency domain).

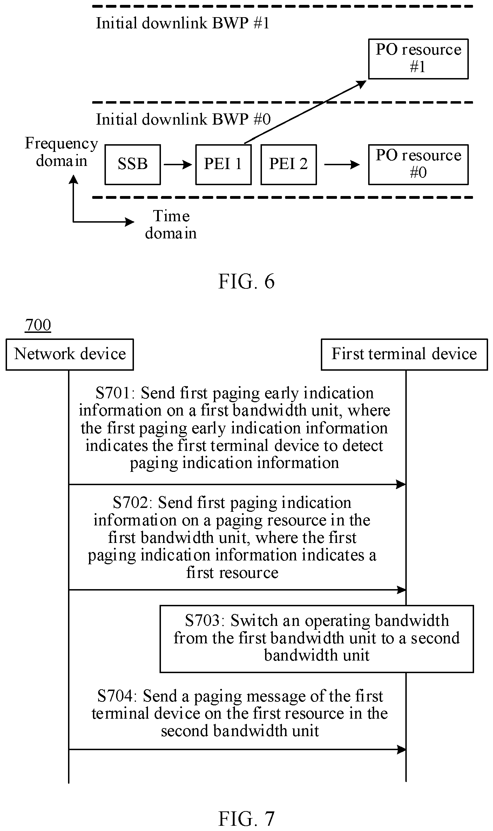

For example, as shown in FIG. 6, the network device configures, by using first configuration information, the plurality of terminal devices to detect the paging early indication information on an initial downlink BWP #0 (which is an example of the first bandwidth unit). The initial downlink BWP #0 includes an SSB resource. The plurality of terminal devices may receive an SSB on the SSB resource, and perform time synchronization and/or frequency synchronization with the network device based on the SSB. The first terminal device detects a PEI 1 (which is an example of the first paging early indication information) on a resource used to carry the PEI 1, and the second terminal device detects a PEI 2 (which is an example of the second paging early indication information) on a resource used to carry the PEI 2. The resource used to carry the PEI 1 and the resource used to carry the PEI 2 do not overlap in time domain. After determining to page the first terminal device and the second terminal device, the network device sends the PEI 1 on the resource that is used to carry the PEI 1 and that is in the initial downlink BWP #0, and sends the PEI 2 on the resource used to carry the PEI 2. After obtaining the PEI 1 through detection, the first terminal device detects the paging indication information on a PO resource #1 in an initial downlink BWP #1. After obtaining the PEI2 through detection, the second terminal device detects the paging indication information on a PO resource #0 in the initial downlink BWP #0.

Optionally, the first paging early indication information may be paging early indication information corresponding to the first terminal device group to which the first terminal device belongs, and the second paging early indication information may be paging early indication information corresponding to a second terminal device group to which the second terminal device belongs.

S302: The first terminal device switches an operating bandwidth from the first bandwidth unit to the second bandwidth unit.

The paging resource of the first terminal device is in the second bandwidth unit. After being woken up based on the first paging early indication information in S301, the terminal device switches the operating bandwidth to the second bandwidth unit in which the paging resource of the first terminal device is located, to detect the paging indication information on the paging resource in the second bandwidth unit.

In this application, an implementation in which the operating bandwidth of the terminal device is switched from one bandwidth unit to another bandwidth unit may be that the terminal device performs radio frequency readjustment, to readjust the operating bandwidth from one bandwidth unit to another bandwidth unit. Alternatively, frequency bandwidth of the terminal device includes a plurality of bandwidth units, and the terminal device switches the operating bandwidth from one bandwidth unit to another bandwidth unit without performing radio frequency readjustment. However, this application is not limited thereto.

S303: The network device sends first paging indication information on the paging resource in the second bandwidth unit, where the first paging indication information indicates a first resource, and/or the first paging indication information indicates that system information is updated.

Correspondingly, the first terminal device detects the first paging indication information on the paging resource in the second bandwidth unit.

Optionally, if the first terminal device obtains the first paging indication information through detection, and the first paging indication information indicates the first resource, the first terminal device receives a paging message on the first resource based on an indication.

After receiving the paging message, the first terminal device may perform a subsequent step for example, initiate a random access process, based on an indication of the paging message. However, this application is not limited thereto.

Alternatively, if the first terminal device obtains the first paging indication information through detection, and the first paging indication information indicates that the system information is updated, the first terminal device may receive updated system information.

Alternatively, if the first terminal device obtains no first paging indication information through detection, or the first terminal device obtains the first paging indication information through detection and obtains no paging message of the first terminal device through detection on the first resource, the first terminal device switches the operating bandwidth from the second bandwidth unit to the first bandwidth unit. After switching the operating bandwidth from the second bandwidth unit to the first bandwidth unit, the first terminal device may continue to detect the paging early indication information on the first bandwidth unit.

According to the solutions in Embodiment 2 of this application, the network device configures the plurality of terminal devices to detect the paging early indication information on a first bandwidth unit including a reference signal resource. In this way, the terminal device can perform time synchronization and/or frequency synchronization with the network device and detect the paging early indication information without bandwidth switching, to maintain low power consumption when the terminal device is not paged. A paging resource used by the terminal device to detect the paging indication information may not be in the first bandwidth unit. After being woken up, the terminal device may detect the paging indication information in a bandwidth unit in which the paging resource is located.

**Embodiment 3**

In Embodiment 3, a plurality of terminal devices detect paging early indication information on a first bandwidth unit, and a paging resource used by the plurality of terminal devices to detect paging indication information is also in the first bandwidth unit. A terminal device in the plurality of terminal devices may receive, on a bandwidth unit other than the first bandwidth unit, a PDSCH used to carry a paging message.

FIG. 7 is a schematic flowchart according to Embodiment 3 of this application.

S701: A network device sends first paging early indication information on a first bandwidth unit, where the first paging early indication information indicates a first terminal device to detect paging indication information.

The plurality of terminal devices detect paging early indication information on the first bandwidth unit. If the first terminal device obtains the first paging early indication information through detection, and the first terminal device determines to be woken up to detect the paging indication information, the first terminal device detects the paging indication information on a paging resource in the first bandwidth unit. If obtaining no first paging early indication information, the first terminal device continues to detect the paging early indication information on the first bandwidth unit.

In an implementation, the first paging early indication information specifically indicates the plurality of terminal devices that detect the paging early indication information on the first bandwidth unit to detect the paging indication information.

In another implementation, the first paging early indication information includes a plurality of indication fields. The plurality of indication fields correspond to the plurality of terminal devices. One of the plurality of indication fields indicates a corresponding terminal device to detect or not to detect the paging indication information. The first terminal device corresponds to a first indication field in the plurality of indication fields. The first indication field indicates the first terminal device to detect the paging indication information.

Optionally, one of the plurality of indication fields corresponds to one terminal device or a plurality of terminal devices (for example, one terminal device group). The indication field specifically indicates one corresponding terminal device or one corresponding terminal device group to detect or not to detect the paging indication information.

In another implementation, resources used by different terminal devices in the plurality of terminal devices or different terminal device groups to detect the paging early indication information are different.

For a part that is in a specific implementation of the paging early indication information and that is the same as or similar to that in Embodiment 2, refer to the descriptions in Embodiment 2. For brevity, details are not described herein again. In Embodiment 3, a paging resource of the plurality of terminal devices is in the first bandwidth unit. If obtaining, through detection on the first bandwidth unit, the paging early indication information that indicates to detect the paging indication information, a terminal device detects the paging indication information on the paging resource in the first bandwidth unit.

S702: The network device sends first paging indication information on the first bandwidth unit, where the first paging indication information indicates a first resource.

After determining, based on the first paging early indication information, to detect the paging indication information in S701, the first terminal device detects the paging indication information on the paging resource in the first bandwidth unit.

The first resource is used to carry a paging message of the first terminal device, and the first resource is a resource in a second bandwidth unit.

By way of example, and not limitation, the first resource is a PDSCH.

If obtaining the first paging indication information through detection, the first terminal device receives the paging message on the first resource in the second bandwidth unit. Alternatively, if obtaining no paging indication information through detection, the first terminal device detects the paging early indication information on the first bandwidth unit.

In an implementation, the first paging indication information indicates that the first resource is the resource in the second bandwidth unit. After receiving the first paging indication information, the first terminal device determines, based on the first paging indication information, to receive the paging message on the first resource in the second bandwidth unit.

For example, after receiving the first paging indication information, the first terminal device may determine, based on the first paging indication information, that the first resource is in the second bandwidth unit, and may determine a frequency domain resource, a time domain resource, an MCS, and the like of the first resource based on scheduling information in the first paging indication information. In this case, the first terminal device receives the paging message on the first resource in the second bandwidth unit.

In another implementation, a bandwidth unit used by the terminal device to receive the paging message is predefined or preconfigured, and the first paging indication information includes only scheduling information of the first resource.

For example, it is predefined or preconfigured that the first terminal device receives the paging message on the second bandwidth unit. After receiving the first paging indication information, the first terminal device determines a frequency domain resource, a time domain resource, an MCS, and the like of the first resource based on scheduling information in the first paging indication information. In this case, the first terminal device determines the first resource in the second bandwidth unit, and receives the paging message on the first resource.

Optionally, the first terminal device receives the paging message on the second bandwidth unit, and a second terminal device receives the paging message on the first bandwidth unit. The network device may indicate, by using the first paging early indication information, the first terminal device and the second terminal device to detect the paging indication information. The network device sends the first paging indication information on the paging resource in the first bandwidth unit. The first terminal device and the second terminal device respectively determine, in the second bandwidth unit and the first bandwidth unit based on the first paging indication information, respective resources for receiving the paging message.

In an implementation, scheduling information corresponding to a resource used by the first terminal device to receive the paging message is the same as that corresponding to a resource used by the second terminal device to receive the paging message. In other words, the first paging indication information includes one piece of scheduling information, and the first terminal device and the second terminal device may share the scheduling information in the first paging indication information. The first terminal device and the second terminal device each determine, based on the scheduling information, the resource for receiving the paging message.

Optionally, the scheduling information may include but is not limited to a modulation coding scheme (modulation coding scheme, MCS) indication field, a frequency domain resource allocation (frequency domain resource allocation, FDRA) indication field, a time domain resource allocation (time domain resource allocation, TDRA) indication field, and the like. The FDRA indication field indicates a frequency domain resource, and the TDRA indication field indicates a time domain resource.

In another implementation, scheduling information corresponding to a resource used by the first terminal device to receive the paging message is different from that corresponding to a resource used by the second terminal device to receive the paging message. The first paging indication information may include two pieces of scheduling information, where one piece of scheduling information indicates the paging resource in the first bandwidth unit, and the other piece of scheduling information indicates a resource that is in the second bandwidth unit and that is used to carry the paging message; or one piece of scheduling information indicates a resource that is used by the second terminal device to carry the paging message and that is in the first bandwidth unit, and the other piece of scheduling information indicates a resource that is used by the first terminal device to carry the paging message and that is in the second bandwidth unit.

For example, scheduling information of the second terminal device is indicated by using a related indication field (such as an MCS indication field, an FDRA indication field, or a TDRA indication field) in existing paging indication information, and scheduling information of the first terminal device is indicated by using a reserved bit in the existing paging indication information.

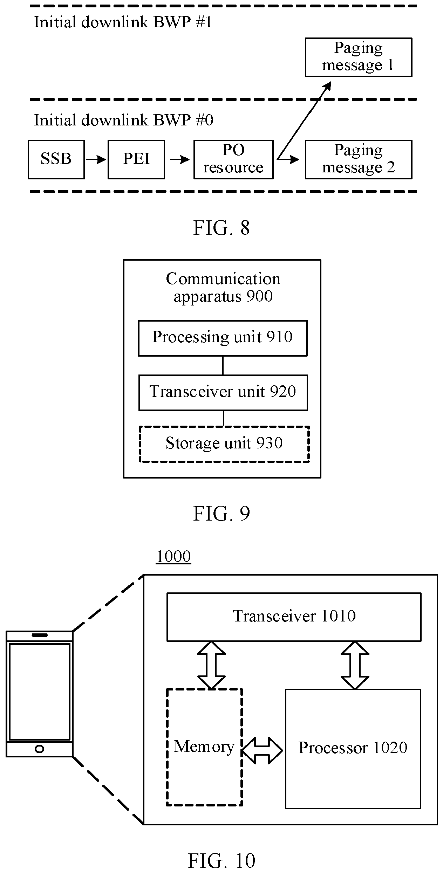

For example, as shown in FIG. 8, the first terminal device receives a paging message on an initial downlink BWP #1, the second terminal device receives a paging message on an initial downlink BWP #0, and the plurality of terminal devices detect a PEI (which is an example of the paging early indication information) on the initial downlink BWP #0. The PEI indicates the first terminal device and the second terminal device to detect the paging indication information. In this case, after receiving the PEI, the first terminal device and the second terminal device detect the paging indication information on a PO resource in the initial downlink BWP #0. Scheduling information in the paging indication information indicates the first resource. For example, the paging indication information indicates an MCS, a frequency domain resource, and a time domain resource of the first resource by using an MCS indication field, an FDRA indication field, a TDRA indication field, and the like. In this case, the first terminal device determines a first resource in the initial downlink BWP #1 based on the scheduling information, so that the first terminal device receives the paging message on the first resource in the initial downlink BWP #1. The second terminal device determines a first resource in the initial downlink BWP #0 based on the scheduling information, so that the first terminal device receives the paging message on the first resource in the initial downlink BWP #0.

S703: The first terminal device switches an operating bandwidth from the first bandwidth unit to the second bandwidth unit.

If obtaining the first paging indication information through detection in S702, the first terminal device may determine, based on the first paging indication information, to receive the paging message on the first resource in the second bandwidth unit. The first terminal device switches the operating bandwidth from the first bandwidth unit to the second bandwidth unit, to receive the paging message on the first resource.

Optionally, a time interval between the first resource and a paging resource used to carry the first paging indication information is greater than or equal to a first threshold, and the first threshold is related to duration needed for switching a bandwidth unit by the first terminal device.

Data cannot be received or sent in a process in which the terminal device switches a bandwidth unit (for example, a BWP switching process, a BWP readjustment process, or a radio frequency readjustment process). Therefore, if the first paging indication information and a first resource scheduled by the first paging indication information is not in a same bandwidth unit, plenty of time intervals should be reserved between the first resource indicated by the first paging indication information and the paging resource that carries the first paging indication information, so that the terminal device can complete bandwidth unit switching. Switching duration of the bandwidth unit is related to a capability of the terminal device. For example, the switching duration may be duration of X symbols or X slots, where X is a positive integer. The first threshold is greater than or equal to the switching duration.

S704: The network device sends the paging message of the first terminal device on the first resource in the second bandwidth unit.

Correspondingly, the first terminal device receives the paging message on the first resource. After receiving the paging message, the first terminal device performs a subsequent step, for example, initiates random access, based on an indication of the paging message. However, this application is not limited thereto.

According to the solutions in Embodiment 3 of this application, the plurality of terminal devices detect the paging early indication information and the paging indication information on a first bandwidth unit including a synchronization reference signal, so that power consumption of the terminal device can be reduced, resource overheads can be reduced, and resource utilization can be improved. The plurality of terminal devices receive the paging message on a plurality of bandwidth units, so that a paging capacity can be increased, to enable more terminal devices to initiate a paging process.

**Embodiment 4**

Embodiment 4 provides a method for configuring a plurality of initial downlink bandwidth units by a network device for a terminal device.

The network device may send fourth configuration information. The fourth configuration information is used to configure a plurality of bandwidth units, and the plurality of bandwidth units are used by the terminal device to perform an initial access process.

In other words, the plurality of bandwidth units are initial downlink bandwidth units, or are referred to as initial downlink bandwidth parts (initial DL BWPs). An initial downlink bandwidth unit may be further used by the network device and the terminal device to perform a paging process. In addition, the initial downlink bandwidth unit may be further used for data transmission between the terminal device and the network device.

For example, the fourth configuration information may be an SIB 1 or an RRC message. The fourth configuration information may include but is not limited to parameters such as a frequency domain position (for example, a start location and a frequency domain width) and a subcarrier spacing (subcarrier spacing, SCS) of each initial downlink bandwidth unit.

The fourth configuration information may include identification information of the plurality of bandwidth units. Identification information of one bandwidth unit includes first identification information and second identification information. The first identification information indicates that the bandwidth unit is a bandwidth unit used by the terminal device to perform the initial access process. The second identification information identifies one of the bandwidth units used by the terminal device to perform the initial access process.

In an implementation, identification information of the initial downlink bandwidth unit may be denoted as OX, where "0" in the identification information may be used as first identification information to identify that the bandwidth unit is the initial downlink bandwidth unit, and "X" may be used as second identification information to distinguish the bandwidth unit from another initial downlink bandwidth unit. In other words, one initial downlink bandwidth unit is identified by using one piece of identification information, and the first identification information and the second identification information are two pieces of sub-identification information of one initial downlink bandwidth unit.

For example, the network device includes three initial downlink BWPs, a BWP #0A, a BWP #0B, and a BWP #0C. However, this application is not limited thereto. Alternatively, the three initial downlink BWPs may be respectively a BWP #01, a BWP #02, and a BWP #03, where first identification information "0" indicates that the BWP is an initial BWP, and second identification information "1", second identification information "2", and second identification information "3" are respectively used to identify the three BWPs in the initial BWPs.

In this implementation, when determining, based on identification information of the terminal device and a mapping rule, an initial downlink bandwidth unit in which a paging resource is located, the network device and the terminal device may determine the initial downlink bandwidth unit based on a sequence number obtained through sorting identification information of an initial downlink bandwidth unit configured with the paging resource. However, this application is not limited thereto.

In another implementation, the plurality of initial downlink bandwidth units each may be considered as an initial downlink bandwidth unit 0. In other words, first identification information of each of the plurality of initial downlink bandwidth units is 0. Each initial downlink bandwidth unit further includes frequency domain position identification information (namely, second identification information) used to indicate the frequency domain position of the initial downlink bandwidth unit.

For example, frequency domain position identification information of the initial downlink bandwidth units may be a location #0, a location #1, ..., and a location #N respectively. In other words, one initial downlink bandwidth unit uses two pieces of identification information: first identification information and second identification information. The first identification information of each initial downlink bandwidth unit is 0, and the second identification information identifies a frequency domain position of the initial downlink bandwidth unit.

For example, the network device includes three initial downlink BWPs. In this case, the three initial downlink BWPs include a BWP #0, a BWP whose second identification information is location #0, a BWP #0, a BWP whose second identification information is location #1, a BWP #0, and a BWP whose second identification information is location #2.

In this implementation, when determining, based on identification information of the terminal device and a mapping rule, an initial downlink bandwidth unit in which a paging resource is located, the network device and the terminal device may determine, based on second identification information of an initial downlink bandwidth unit configured with a paging resource or based on a sequence number obtained through sorting the second identification information. However, this application is not limited thereto.

For example, the network device includes two initial downlink BWPs #0 configured with paging resources, and second identification information is respectively {location #0, location #1}. In this case, paging resources of terminal devices whose identification information is {0, 2, 4, 6} are on a BWP #0 whose second identification information is the location #0, and a paging resource of a terminal device whose identification information is {1, 3, 5, 7} is on a BWP #0 whose second identification information is the location ID #1.

Optionally, configuration parameters of the plurality of initial downlink bandwidth units may be partially or completely the same.

For example, in configuration parameters of a plurality of initial downlink BWPs of the network device, other configuration parameters different from a center frequency of the plurality of initial downlink BWPs of the network device are the same. For example, the other configuration parameters may include an SCS, an RRC configuration parameter, and the like. However, this application is not limited thereto.

Optionally, one or more of the plurality of initial downlink bandwidth units include a resource used to carry a synchronization reference signal. By way of example, and not limitation, the synchronization reference signal may be an SSB, and the resource used to carry the synchronization reference signal may be referred to as an SSB resource.

That one initial downlink bandwidth unit includes the SSB resource may be understood as that bandwidth of the initial downlink bandwidth unit includes bandwidth of the SSB resource.

For example, in the plurality of initial downlink BWPs of the network device, only one initial downlink BWP includes the SSB resource, the plurality of initial downlink BWPs each include the SSB resource, or only a part of the plurality of initial downlink BWPs include the SSB resource.

Optionally, for an unpaired spectrum operation or a time division duplex (time division duplex, TDD) frequency spectrum operation, one initial downlink bandwidth unit (for example, the initial downlink BWP) in the plurality of initial downlink bandwidth units of the network device is associated with one initial uplink bandwidth unit (for example, an initial uplink BWP). The associated initial downlink bandwidth unit and initial uplink bandwidth unit have same bandwidth unit identification information, or same first identification information and second identification information. The associated initial downlink bandwidth unit and initial uplink bandwidth unit may further have a same center frequency.

Optionally, the network device further configures a CORESET in one or more of the plurality of initial downlink bandwidth units for the terminal device.

A CORESET in one initial downlink bandwidth unit may be understood as that bandwidth of the initial downlink bandwidth unit includes bandwidth of the CORESET, and the initial downlink initial BWP is associated with the CORESET.

For example, only one of the plurality of initial downlink BWPs is configured with a CORESET, each of the plurality of initial downlink BWPs is configured with a CORESET, or only a part of the plurality of initial downlink BWPs is configured with a CORESET.

When CORESETs are configured in the plurality of initial downlink BWPs, it indicates that the network device configures a plurality of CORESETs. The plurality of CORESETs may be used for PDCCH transmission, and a PDCCH is used to carry DCI. The CRC of the DCI may be scrambled by using a P-RNTI, a system information RNTI (denoted as an SI-RNTI), a random access (random access, RA) RNTI (denoted as an RA-RNTI), a message B RNTI (denoted as a MsgB-RNTI), a temporary cell (temporary cell, TC) RNTI (denoted as a TC-RNTI), a C-RNTI, an MCS-C-RNTI, a configured scheduling (configured scheduling, CS) RNTI (denoted as a CS-RNTI), and another user-specific or cell-common or user-group-common RNTI.

Alternatively, the plurality of CORESETs may be predefined or preconfigured in a protocol.

In an implementation, the plurality of CORESETs have different identification information (namely, CORESET IDs) and different frequency domain resources.

For example, the plurality of CORESETs may be respectively a CORESET #0, a CORESET #0A, a CORESET #0B, ..., a CORESET #0X, and the like, where X is a letter (which may be an uppercase letter or a lowercase letter). Alternatively, the plurality of CORESETs may be respectively a CORESET #0, a CORESET #0_1, a CORESET #0_2, ..., a CORESET #0_Y, and the like, where Y is a non-zero positive integer.

In another implementation, the plurality of CORESETs have same identification information (namely, CORESET IDs), and different frequency domain resources.

For example, the plurality of CORESETs each may be a CORESET #0, and the plurality of CORESETs #0 include different frequency domain identification information, for example, a location #0, a location #1, ..., and a location #N.

Optionally, the network device may configure one or more frequency domain resources in the CORESET #0, so that the CORESET has a plurality of different frequency domain resources.

Optionally, configuration parameters of the plurality of CORESETs are partially or completely the same.

For example, the plurality of CORESETs may have same configuration parameters such as duration, a type of mapping between a control channel element (control channel element, CCE) and a resource element group (resource element group, REG), and a precoding granularity.

In an implementation, the plurality of initial downlink initial bandwidth units may be defined by using the plurality of CORESETs. In other words, the plurality of CORESETs may be configured by the network device by using signaling, or may be predefined or preconfigured.

For example, the plurality of CORESETs may be in a one-to-one correspondence with the plurality of initial downlink bandwidth units. The fourth configuration information is specifically used to configure the plurality of CORESETs, and frequency domain bandwidth of each of the plurality of CORESETs is one initial downlink bandwidth unit. Specifically, the fourth configuration information may be used to configure a frequency domain start physical resource block (physical resource block, PRB) and a quantity of consecutive PRBs that are of one CORESET. In this case, a start PRB and a quantity of consecutive PRBs that are of an initial downlink bandwidth unit corresponding to the CORESET are the same as those of the CORESET.

In a specific example, the network device configures a plurality of CORESETs. The plurality of CORESETs are respectively referred to as a CORESET #0, a CORESET #0A, a CORESET #0B, ..., and a CORESET #0X. Frequency domain resources of the plurality of CORESETs are a plurality of initial downlink BWPs. The plurality of initial downlink BWPs are respectively an initial downlink BWP #0, an initial downlink BWP #0A, an initial downlink BWP #0B, ..., an initial downlink BWP #0X, and the like, where X may be a letter (which may be in uppercase or lowercase). Optionally, the CORSET #0 may be configured by using a master information block (master information block, MIB), and other CORESETs (for example, the CORESET #0A to the CORESET #0X) may be configured by using the SIB 1.

The following describes a method for receiving system information by a REDCAP terminal device on an initial downlink bandwidth unit according to an embodiment of this application.

In an implementation, a network device sends all SIBs in one bandwidth unit in the initial downlink bandwidth unit, and the terminal device receives all the SIBs in the bandwidth unit.

In other words, an SIB 1 and an SIB or SIBs other than the SIB 1 are sent or received on one bandwidth unit. The SIB or SIBs other than the SIB 1 may include an SIB 2 to an SIB 9. However, this application is not limited thereto.

By way of example, and not limitation, the bandwidth unit is a BWP, and a BWP used to send or receive all SIBs is a BWP #0, or a BWP #0 whose second identification information is location #0.

In another implementation method, an SIB 1 is sent or received on one bandwidth unit in the initial downlink bandwidth unit, and an SIB or SIBs other than the SIB 1 may be sent or received on the bandwidth unit on which the SIB 1 is sent or received, or may be sent or received on another initial downlink bandwidth unit on which the SIB 1 is not sent or received.

Optionally, an initial downlink bandwidth unit used to send or receive the SIB or SIBs other than the SIB 1 may be predefined, or may be indicated by the SIB 1.

By way of example, and not limitation, the bandwidth unit is a BWP, and a BWP used to send or receive the SIB 1 is a BWP #0, or a BWP #0 whose second identification information is location #0.

In another implementation, a network device may configure a dedicated SIB 1 for the REDCAP terminal device, and the SIB 1 specific to the REDCAP terminal device may be sent or received on a plurality of initial bandwidth units.

For example, a common SIB 1 (which is an SIB 1 that is not specific to the REDCAP terminal device) may be specified to be sent or received on an initial BWP #0 or a BWP #0 whose second identification information is location #0. The SIB 1 specific to the REDCAP terminal device and an SIB or SIBs other than the SIB 1 may be sent or received on the initial BWP #0 or the BWP #0 whose second identification information is location #0, or may be sent or received on another initial downlink BWP.

## Embodiment 5

Embodiment 5 provides a method for configuring, by a network device, a paging resource for a terminal device on a plurality of bandwidth units.

By way of example, and not limitation, the plurality of bandwidth units are a part or all of a plurality of initial downlink bandwidth units of the network device.

In an implementation, the network device may send a plurality of pieces of second configuration information to the terminal device. One of the plurality of pieces of second configuration information is used to configure a paging resource in one of the plurality of bandwidth units.

The network device may configure a paging resource in one bandwidth unit by using one piece of second configuration information. The network device completes configuration of paging resources in a plurality of bandwidth units of the network device by using the plurality of pieces of second configuration information. Each piece of second configuration information may include configuration information such as paging search space (paging search space), a corresponding paging occasion PO resource, and a CORESET associated with the paging search space. Configuration parameters of the plurality of paging resources may be different. However, this application is not limited thereto.

Optionally, second configuration information corresponding to each bandwidth unit may be included in configuration information of the bandwidth unit, or the plurality of pieces of second configuration information are included in same configuration information.

In another implementation, the network device sends third configuration information to the terminal device. The third configuration information is used to configure a paging resource in each of the plurality of bandwidth units.

In other words, configuration parameters of paging resources in the plurality of bandwidth units are the same.

For example, the third configuration information includes configuration information such as paging search space (paging search space), a corresponding paging occasion PO resource, and a CORESET associated with the paging search space. After receiving the third configuration information from the network device, the terminal device determines the paging resources in the plurality of bandwidth units based on the paging search space (paging search space), the corresponding paging occasion PO resource, and the CORESET associated with the paging search space that are in the third configuration information.

## Embodiment 6

Embodiment 6 of this application provides a method for performing cell search and cell camping by a terminal device.

The terminal device may be classified into two types of terminal devices based on maximum transmit power of the terminal device. Maximum transmit power of a second-type terminal device is less than maximum transmit power of a first-type terminal device.

The first-type terminal device may be referred to as a legacy (legacy) terminal device, and the second-type terminal device may be referred to as a low-power terminal device. However, this application is not limited thereto.

For example, the maximum transmit power of the legacy terminal device may be 23 dBm or 26 dBm, and the maximum transmit power of the low-power terminal device may be 14 dBm, 0 dBm, or the like. By way of example, and not limitation, this type of terminal device whose maximum transmit power is low may be referred to as the low-power terminal device.

Optionally, a type of the terminal device may be determined based on a power threshold. A terminal device whose maximum transmit power is greater than or equal to the power threshold belongs to the first-type terminal device, and a terminal device whose maximum transmit power is less than the power threshold belongs to the second-type terminal device.

The network device may indicate, by using indication information, to allow or not allow the second-type terminal device (namely, the low-power terminal device) to access a cell managed by the network device or establish a radio resource connection to the network device.

Optionally, when the second-type terminal device meets an access condition, the network device may allow the second-type terminal device to access the network device.

The access condition may be that reference signal received power (reference signal received power, RSRP) of a reference signal that is sent by the network device and that is obtained through measurement by the second-type terminal device is greater than or equal to a preset RSRP threshold.

The preset RSRP threshold may be greater than an RSRP threshold used by the legacy terminal device to perform cell selection or cell camping. For example, the preset RSRP threshold may be a sum of the RSRP threshold used by the legacy terminal device to perform cell selection or cell camping and an RSRP offset, and may be denoted as: preset RSRP threshold = RSRP threshold used by the legacy terminal device to perform cell selection or cell camping + RSRP offset.

The RSRP offset may be a difference between the maximum transmit power of the legacy terminal device and the maximum transmit power of the low-power terminal device. For example, if the maximum transmit power of the legacy terminal device is 23 dBm, and the maximum transmit power of the low-power terminal device is 14 dBm, the RSRP offset may be 9 dBm. However, this application is not limited thereto.

In an implementation, the network device may not allow or allow the low-power terminal device to access the cell managed by the network device or the network device.

In another implementation, the network device may allow the low-power terminal device to access a cell or the network device. In addition, for the low-power terminal device, RSRP threshold for cell selection or camping of the low-power terminal device = RSRP threshold for cell selection or camping of an existing terminal device + first offset value. The first offset value is equal to a difference between the maximum transmit power of the low-power terminal device and maximum transmit power of the existing terminal device. For example, the maximum transmit power of the existing terminal device is 23 dBm, and the maximum transmit power of the low-power terminal device is 14 dBm. In this case, the first offset value is 9 dBm.

The method provided in this application is described in detail by using the foregoing embodiments. It should be noted that an application scope of this application is not limited thereto. In the foregoing embodiments, an example in which the method provided in this application is applied to the paging process to reduce power consumption of the terminal device is used for description, for example, a paging process of a terminal device in an RRC idle or inactive state. This application may be further applied to a paging process of a terminal device in an RRC connected state, or a data transmission process of a terminal device in a connected state. For example, the network device may indicate, by using wake-up indication information or sleep indication information, whether the terminal device in the RRC connected state is woken up to receive data or send data, or indicate whether the terminal device is in a sleep state to not receive data or send data. The method provided in this application may be further applied to another process to reduce power consumption of the terminal device. Variation or replacement readily figured out by a person skilled in the art within the technical scope disclosed in this application shall fall within the protection scope of this application.

The methods provided in embodiments of this application are described above in detail with reference to FIG. 2 to FIG. 8. The following describes in detail apparatuses provided in embodiments of this application with reference to FIG. 9 to FIG. 11. To implement functions in the methods provided in the foregoing embodiments of this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 9 is a schematic block diagram of a communication apparatus according to an embodiment of this application. As shown in FIG. 9, the communication apparatus 900 may include a transceiver unit 920.

In a possible design, the communication apparatus 900 may correspond to the terminal device in the foregoing method embodiments, may be a chip disposed (or used) in the terminal device, or may be another apparatus, module, circuit, unit, or the like that can implement a method performed by the terminal device.

It should be understood that the communication apparatus 900 may correspond to the terminal device in the methods 200, 300, and 700 according to embodiments of this application. The communication apparatus 900 may include units configured to perform the methods performed by the terminal device in the methods 200, 300, and 700 in FIG. 2, FIG. 3, and FIG. 7. In addition, the units in the communication apparatus 900 and the foregoing other operations and/or functions are used to implement corresponding procedures of the methods 200, 300, and 700 in FIG. 2, FIG. 3, and FIG. 7.

Optionally, the communication apparatus 900 may further include a processing unit 910. The processing unit 910 may be configured to process instructions or data, to implement a corresponding operation.

It should be further understood that when the communication apparatus 900 is the chip disposed (or used) in the terminal device, the transceiver unit 920 in the communication apparatus 900 may be an input/output interface or circuit in the chip, and the processing unit 910 in the communication apparatus 900 may be a processor in the chip.

Optionally, the communication apparatus 900 may further include a storage unit 930. The storage unit 930 may be configured to store instructions or data. The processing unit 910 may execute the instructions or the data stored in the storage unit, to enable the communication apparatus to implement a corresponding operation.

It should be understood that the transceiver unit 920 in the communication apparatus 900 may be implemented through a communication interface (for example, a transceiver or an input/output interface), for example, may correspond to a transceiver 1010 in a terminal device 1000 shown in FIG. 10. The processing unit 910 in the communication apparatus 900 may be implemented via at least one processor, for example, may correspond to a processor 1020 in the terminal device 1000 shown in FIG. 10. Alternatively, the processing unit 910 in the communication apparatus 900 may be implemented via at least one logic circuit. The storage unit 930 in the communication apparatus 900 may correspond to a memory in the terminal device 1000 shown in FIG. 10.

It should be further understood that a specific process in which the units perform the foregoing corresponding steps is described in detail in the foregoing method embodiments. For brevity, details are not described herein.

In another possible design, the communication apparatus 900 may correspond to the network device in the foregoing method embodiments, may be a chip disposed (or used) in the network device, or may be another apparatus, module, circuit, unit, or the like that can implement a method performed by the network device.

It should be understood that the communication apparatus 900 may correspond to the network device in the methods 200, 300, and 700 according to embodiments of this application. The communication apparatus 900 may include units configured to perform the methods performed by the network device in the methods 200, 300, and 700 in FIG. 2, FIG. 3, and FIG. 7. In addition, the units in the communication apparatus 900 and the foregoing other operations and/or functions are used to implement corresponding procedures of the methods 200, 300, and 700 in FIG. 2, FIG. 3, and FIG. 7.

Optionally, the communication apparatus 900 may further include a processing unit 910. The processing unit 910 may be configured to process instructions or data, to implement a corresponding operation.

It should be further understood that when the communication apparatus 900 is the chip disposed (or used) in the network device, the transceiver unit 920 in the communication apparatus 900 may be an input/output interface or circuit in the chip, and the processing unit 910 in the communication apparatus 900 may be a processor in the chip.

Optionally, the communication apparatus 900 may further include a storage unit 930. The storage unit 930 may be configured to store instructions or data. The processing unit 910 may execute the instructions or the data stored in the storage unit, to enable the communication apparatus to implement a corresponding operation.

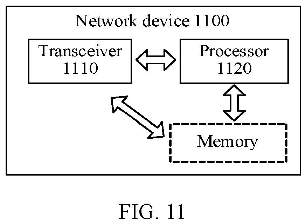

It should be understood that when the communication apparatus 900 is the network device, the transceiver unit 920 in the communication apparatus 900 may be implemented through a communication interface (for example, a transceiver or an input/output interface), for example, may correspond to a transceiver 1110 in a network device 1100 shown in FIG. 11. The processing unit 910 in the communication apparatus 900 may be implemented via at least one processor, for example, may correspond to a processor 1120 in the network device 1100 shown in FIG. 11. The processing unit 910 in the communication apparatus 900 may be implemented via at least one logic circuit.

It should be further understood that a specific process in which the units perform the foregoing corresponding steps is described in detail in the foregoing method embodiments. For brevity, details are not described herein.

FIG. 10 is a schematic diagram of a structure of a terminal device 1000 according to an embodiment of this application. The terminal device 1000 may be used in the system shown in FIG. 1, to perform functions of the terminal device in the foregoing method embodiments. As shown in the figure, the terminal device 1000 includes a processor 1020 and a transceiver 1010. Optionally, the terminal device 1000 further includes a memory. The processor 1020, the transceiver 1010, and the memory may communicate with each other through an internal connection path, to transfer a control signal and/or a data signal. The memory is configured to store a computer program, and the processor 1020 is configured to execute the computer program in the memory, to control the transceiver 1010 to receive and send signals.

The processor 1020 and the memory may be integrated into one processing apparatus. The processor 1020 is configured to execute program code stored in the memory to implement the foregoing functions. During specific implementation, the memory may alternatively be integrated into the processor 1020, or may be independent of the processor 1020. The processor 1020 may correspond to the processing unit in FIG. 9.

The transceiver 1010 may correspond to the transceiver unit in FIG. 9. The transceiver 1010 may include a receiver (or referred to as a receiver machine or a receiver circuit) and a transmitter (or referred to as a transmitter machine or a transmitter circuit). The receiver is configured to receive a signal. The transmitter is configured to transmit a signal.

It should be understood that the terminal device 1000 shown in FIG. 10 can implement the processes of the terminal device in the method embodiments shown in FIG. 2, FIG. 3, and FIG. 7. Operations and/or functions of the modules in the terminal device 1000 are separately intended to implement corresponding procedures in the foregoing method embodiments. For details, refer to the descriptions in the foregoing method embodiments. To avoid repetition, detailed descriptions are properly omitted herein.

The processor 1020 may be configured to perform an action that is implemented inside the terminal device and that is described in the foregoing method embodiments. The transceiver 1010 may be configured to perform a sending action by the terminal device for the network device or a receiving operation from the network device in the foregoing method embodiments. For details, refer to the descriptions in the foregoing method embodiments. Details are not described herein again.

Optionally, the terminal device 1000 may further include a power supply, configured to supply power to various components or circuits in the terminal device.

In addition, to improve functions of the terminal device, the terminal device 1000 may further include an input/output apparatus, for example, include one or more of an input unit, a display unit, an audio circuit, a camera, a sensor, and the like, and the audio circuit may further include a speaker, a microphone, and the like.

FIG. 11 is a schematic diagram of a structure of a network device according to an embodiment of this application. The network device 1100 may be used in the system shown in FIG. 1, to perform functions of the network device in the foregoing method embodiments. As shown in FIG. 11, the network device 1100 includes a processor 1120 and a transceiver 1110. Optionally, the network device 1100 further includes a memory. The processor 1120, the transceiver 1110, and the memory may communicate with each other through an internal connection path, to transfer a control signal and/or a data signal. The memory is configured to store a computer program, and the processor 1120 is configured to execute the computer program in the memory, to control the transceiver 1110 to receive and send signals.

The processor 1120 and the memory may be integrated into one processing apparatus. The processor 1120 is configured to execute program code stored in the memory to implement the foregoing functions. During specific implementation, the memory may alternatively be integrated into the processor 1020, or may be independent of the processor 1120. The processor 1120 may correspond to the processing unit in FIG. 9.

The transceiver 1110 may correspond to the transceiver unit in FIG. 9. The transceiver 1110 may include a receiver (or referred to as a receiver machine or a receiver circuit) and a transmitter (or referred to as a transmitter machine or a transmitter circuit). The receiver is configured to receive a signal. The transmitter is configured to transmit a signal.

It should be understood that the network device 1100 shown in FIG. 11 can implement the processes of the network device in the method embodiments shown in FIG. 2, FIG. 3, and FIG. 7. Operations and/or functions of the modules in the network device 1100 are separately used to implement corresponding procedures in the foregoing method embodiments. For details, refer to the descriptions in the foregoing method embodiments. To avoid repetition, detailed descriptions are properly omitted herein.

It should be understood that the network device 1100 shown in FIG. 11 may be an eNB or a gNB. Optionally, the network device includes a network device of a CU, a DU, an AAU, and the like. Optionally, the CU may be specifically classified into a CU-CP and a CU-UP. A specific architecture of the network device is not limited in this application.

It should be understood that the network device 1100 shown in FIG. 11 may be a CU node or a CU-CP node.

The processor 1120 may be configured to perform an action that is implemented inside the network device and that is described in the foregoing method embodiments. The transceiver 1110 may be configured to perform a sending action by the network device for the terminal device or a receiving operation from the terminal device in the foregoing method embodiments. For details, refer to the descriptions in the foregoing method embodiments. Details are not described herein again.

An embodiment of this application further provides a processing apparatus, including a processor and a (communication) interface. The processor is configured to perform the method according to any one of the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable controller (programmable logic device, PLD) or another integrated chip.

According to the methods provided in embodiments of this application, this application further provides a computer program product. The computer program product includes computer program code. When the computer program code is executed by one or more processors, an apparatus including the processor is enabled to perform the methods in embodiments shown in FIG. 2, FIG. 3, and FIG. 7.

All or a part of the technical solutions provided in embodiments of this application may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, a network device, a terminal device, a core network device, a machine learning device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

According to the methods provided in embodiments of this application, this application further provides a computer-readable storage medium. The computer-readable storage medium stores program code. When the program code is run by one or more processors, an apparatus including the processor is enabled to perform the methods in embodiments shown in FIG. 2, FIG. 3, and FIG. 7.

According to the methods provided in embodiments of this application, this application further provides a system, including the foregoing one or more network devices. The system may further include the foregoing one or more terminal devices.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units. To be specific, the components may be located at one position, or may be distributed on a plurality of network units. A part or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   sending first configuration information to a plurality of terminal devices, wherein the first configuration information is used to configure the plurality of terminal devices to detect paging early indication information on a first bandwidth unit, and the paging early indication information indicates to detect or not to detect paging indication information; and
   sending a reference signal on the first bandwidth unit, wherein the reference signal is used by the plurality of terminal devices to perform time synchronization and/or frequency synchronization with a network device.

2. The method according to claim 1, wherein paging resources used by at least two of the plurality of terminal devices to detect the paging indication information are in different bandwidth units.

3. The method according to claim 1 or 2, wherein the method further comprises:

   sending a plurality of pieces of second configuration information to the plurality of terminal devices, wherein one of the plurality of pieces of second configuration information is used to configure a paging resource in one of a plurality of bandwidth units; or
   sending third configuration information to the plurality of terminal devices, wherein the third configuration information is used to configure a paging resource in each of a plurality of bandwidth units.

4. The method according to claim 3, wherein the plurality of bandwidth units comprise the first bandwidth unit.

5. The method according to claim 3 or 4, wherein the method further comprises:

   sending fourth configuration information, wherein the fourth configuration information is used to configure the plurality of bandwidth units, wherein
   the plurality of bandwidth units are used by a terminal device to perform an initial access process, the fourth configuration information comprises identification information of the plurality of bandwidth units, identification information of one bandwidth unit comprises first identification information and second identification information, the first identification information indicates that the bandwidth unit is a bandwidth unit used by the terminal device to perform the initial access process, and the second identification information identifies one of the bandwidth units used by the terminal device to perform the initial access process.

6. The method according to any one of claims 1 to 5, wherein the method further comprises:

determining, based on identification information of the plurality of terminal devices and a mapping rule, a bandwidth unit in which a paging resource of each of the plurality of terminal devices is located, wherein the mapping rule represents a mapping relationship between identification information of the terminal device and the bandwidth unit; or

sending a plurality of pieces of resource indication information to the plurality of terminal devices, wherein one piece of resource indication information indicates a bandwidth unit in which a paging resource of one of the plurality of terminal devices is located, wherein

the paging resource is used by the terminal device to detect the paging indication information.

7. The method according to any one of claims 1 to 6, wherein a paging resource of a first terminal device in the plurality of terminal devices is in a second bandwidth unit, and the method further comprises:

sending first paging early indication information on the first bandwidth unit, wherein the first paging early indication information indicates the first terminal device to detect the paging indication information; and

sending first paging indication information on the paging resource of the first terminal device in the second bandwidth unit, wherein the first paging indication information indicates a first resource, and the first resource is used to carry a paging message of the first terminal device; and/or the first paging indication information indicates that system information is updated.

8. The method according to any one of claims 1 to 7, wherein the method further comprises:

sending the first paging early indication information on a second resource in the first bandwidth unit, wherein the first paging early indication information indicates the first terminal device to detect the paging indication information, and the plurality of terminal devices comprise the first terminal device; and

sending second paging early indication information on a third resource in the first bandwidth unit, wherein the second paging early indication information indicates a second terminal device to detect the paging indication information, and the plurality of terminal devices comprise the second terminal device, wherein

a time domain resource comprised in the second resource is different from that comprised in the third resource, and/or a frequency domain resource comprised in the second resource is different from that comprised in the third resource.

9. The method according to claim 1, wherein a paging resource used by the plurality of terminal devices to detect the paging indication information is in the first bandwidth unit, and the method further comprises:

sending first paging early indication information on the first bandwidth unit, wherein the first paging early indication information indicates at least one of the plurality of terminal devices to detect the paging indication information, and the at least one terminal device comprises a first terminal device;

sending first paging indication information on the first bandwidth unit, wherein the first paging indication information indicates a first resource, and the first resource is used to carry a paging message of the first terminal device; and

sending the paging message of the first terminal device on the first resource in a second bandwidth unit.

10. The method according to claim 9, wherein a time interval between the first resource and a paging resource used to carry the first paging indication information is greater than or equal to a first threshold, and the first threshold is related to duration needed for switching a bandwidth unit by the first terminal device.

11. A communication method, comprising:

receiving, by a first terminal device, first configuration information from a network device, wherein the first configuration information is used to configure the first terminal device to detect paging early indication information on a first bandwidth unit, and the paging early indication information indicates to detect or not to detect paging indication information; and

receiving, by the first terminal device, a reference signal from the network device on the first bandwidth unit, wherein the reference signal is used by a plurality of terminal devices to perform time synchronization and/or frequency synchronization with the network device.

12. The method according to claim 11, wherein the method further comprises:

receiving, by the first terminal device, second configuration information from the network device, wherein the second configuration information is used to configure a paging resource in a plurality of bandwidth units, and the paging resource is used by a terminal device to detect the paging indication information, wherein

the second configuration information comprises a plurality of pieces of paging resource configuration information, and one of the plurality of pieces of paging resource configuration information is used to configure a paging resource in one of the plurality of bandwidth units; or
the second configuration information comprises one piece of paging resource configuration information, and the one piece of paging resource configuration information is used to configure a paging resource in each of the plurality of bandwidth units.

13. The method according to claim 11 or 12, wherein the plurality of bandwidth units comprise the first bandwidth unit.

14. The method according to claim 12 or 13, wherein the method further comprises:

receiving fourth configuration information from the network device, wherein the fourth configuration information is used to configure the plurality of bandwidth units, wherein
the plurality of bandwidth units are used by the terminal device to perform an initial access process, the fourth configuration information comprises identification information of the plurality of bandwidth units, identification information of one bandwidth unit comprises first identification information and second identification information, the first identification information indicates that the bandwidth unit is a bandwidth unit used by the terminal device to perform the initial access process, and the second identification information identifies one of the bandwidth units used by the terminal device to perform the initial access process.

15. The method according to any one of claims 11 to 14, wherein the method further comprises:

determining, by the first terminal device based on identification information of the first terminal device and a mapping rule, that a paging resource of the first terminal device is in a second bandwidth unit, wherein the mapping rule represents a mapping relationship between identification information of a terminal device and a bandwidth unit; or
receiving, by the first terminal device, resource indication information from the network device, wherein the resource indication information indicates that a paging resource of the first terminal device is in a second bandwidth unit, wherein the paging resource is used by the first terminal device to detect the paging indication information.

16. The method according to claim 15, wherein the method further comprises:

receiving, by the first terminal device, first paging early indication information on the first bandwidth unit, wherein the first paging early indication information indicates the first terminal device to detect the paging indication information; and
detecting, by the first terminal device, the paging indication information on the paging resource in the second bandwidth unit.

17. The method according to claim 16, wherein after the receiving, by the first terminal device, first paging early indication information on the first bandwidth unit, the method further comprises:
if the first paging early indication information indicates the first terminal device to detect the paging indication information, switching or readjusting, by the first terminal device, an operating bandwidth unit from the first bandwidth unit to the second bandwidth unit.

18. The method according to claim 16 or 17, wherein the method further comprises:

if the first terminal device obtains no paging indication information through detection, or if the first terminal device obtains first paging indication information through detection and obtains no paging message of the first terminal device through detection on a first resource, switching or readjusting, by the first terminal device, operating bandwidth from the second bandwidth unit to the first bandwidth unit, wherein the first paging indication information indicates the first resource; and
detecting, by the first terminal device, the paging early indication information on the first bandwidth unit.

19. The method according to claim 16 or 17, wherein the method further comprises:

if the first terminal device obtains first paging indication information through detection, and the first paging indication information indicates a first resource, receiving, by the first terminal device, a paging message on the first resource, wherein the first resource is used to carry the paging message of the first terminal device; and/or
if the first terminal device obtains the first paging indication information through detection, and the first paging indication information indicates that system information is updated, receiving, by the first terminal device, the system information.

**20.** The method according to claim 11, wherein the method further comprises:

> if the first terminal device obtains first paging early indication information through detection on the first bandwidth unit, and the first paging early indication information indicates the first terminal device to detect the paging indication information, detecting, by the first terminal device, the paging indication information on the first bandwidth unit; and
> if the first terminal device obtains no paging indication information through detection, detecting, by the first terminal device, the paging early indication information on the first bandwidth unit; or
> if the first terminal device obtains first paging indication information through detection, the first paging indication information indicates a first resource, and the first resource is used to carry a paging message of the first terminal device, receiving, by the first terminal device, the paging message on the first resource in a second bandwidth unit.

**21.** The method according to claim 20, wherein the receiving, by the first terminal device, a paging message on the first resource in a second bandwidth unit comprises:

> if the first terminal device obtains the first paging indication information through detection, switching or readjusting, by the first terminal device, an operating bandwidth unit from the first bandwidth unit to the second bandwidth unit; and
> receiving, by the first terminal device, the paging message on the first resource in the second bandwidth unit.

**22.** The method according to claim 21, wherein a time interval between the first resource and a paging resource used to carry the first paging indication information is greater than or equal to a first threshold, and the first threshold is related to duration needed for switching a bandwidth unit by the first terminal device.

**23.** The method according to claim 7, 16, or 17, wherein the first paging early indication information is a wake-up indication sequence corresponding to the first terminal device; or the first paging early indication information comprises a plurality of indication fields, the plurality of indication fields correspond to the plurality of terminal devices, one of the plurality of indication fields indicates a corresponding terminal device to detect or not to detect the paging indication information, the first terminal device corresponds to a first indication field in the plurality of indication fields, and the first indication field indicates the first terminal device to detect the paging indication information.

**24.** The method according to claim 23, wherein the plurality of terminal devices comprise a plurality of terminal device groups, a paging resource of one terminal device group in the plurality of terminal device groups is in a same bandwidth unit, paging resources of different terminal device groups are in different bandwidth units, a first terminal device group in the plurality of terminal device groups comprises the first terminal device, and the paging resource is used by the terminal device to detect the paging indication information; and the first paging early indication information specifically indicates a terminal device in the first terminal device group to detect the paging early indication information.

**25.** The method according to claim 24, wherein the first paging early indication information is a wake-up indication sequence corresponding to the first terminal device group, or the first paging early indication information is a wake-up indication sequence corresponding to the second bandwidth unit, and a paging resource of the terminal device in the first terminal device group is in the second bandwidth unit.

**26.** The method according to claim 24, wherein the first paging early indication information comprises the plurality of indication fields; and

> the plurality of indication fields correspond to the plurality of bandwidth units, one of the plurality of indication fields indicates a terminal device group whose paging resource is in a bandwidth unit corresponding to the indication field to detect or not to detect the paging indication information, the second bandwidth unit corresponds to a second indication field in the plurality of indication fields, and the second indication field indicates the first terminal device group whose paging resource is in the second bandwidth unit to detect the paging indication information; or
> the plurality of indication fields correspond to the plurality of terminal device groups, wherein one of the plurality of indication fields indicates a terminal device group corresponding to the indication field to detect or not to detect the paging indication information, the first terminal device corresponds to a third indication field in the plurality of indication fields, and the third indication field indicates the terminal device in the first terminal device group to detect the paging indication information.

**27.** The method according to claim 23, wherein the first paging early indication information specifically indicates the plurality of terminal devices to detect the paging indication information.

28. The method according to any one of claims 1 to 27, wherein the paging resource comprises one or more of the following:
paging search space, a paging occasion resource, or a control resource set associated with paging search space.

29. A communication apparatus, comprising:

a transceiver unit, configured to send first configuration information to a plurality of terminal devices, wherein the first configuration information is used to configure the plurality of terminal devices to detect paging early indication information in a first bandwidth unit, and the paging early indication information indicates to detect or not to detect paging indication information; and
a processing unit, configured to send a reference signal on the first bandwidth unit, wherein the reference signal is used by the plurality of terminal devices to perform time synchronization and/or frequency synchronization with a network device.

30. The apparatus according to claim 29, wherein paging resources used by at least two of the plurality of terminal devices to detect the paging indication information are in different bandwidth units.

31. The apparatus according to claim 29 or 30, wherein the transceiver unit is further configured to:

send a plurality of pieces of second configuration information to the plurality of terminal devices, wherein one of the plurality of pieces of second configuration information is used to configure a paging resource in one of a plurality of bandwidth units; or
send third configuration information to the plurality of terminal devices, wherein the third configuration information is used to configure a paging resource in each of a plurality of bandwidth units.

32. The apparatus according to claim 31, wherein the plurality of bandwidth units comprise the first bandwidth unit.

33. The apparatus according to claim 31 or 32, wherein

the transceiver unit is further configured to send fourth configuration information, wherein the fourth configuration information is used to configure the plurality of bandwidth units, wherein the plurality of bandwidth units are used by a terminal device to perform an initial access process, the fourth configuration information comprises identification information of the plurality of bandwidth units, identification information of one bandwidth unit comprises first identification information and second identification information, the first identification information indicates that the bandwidth unit is a bandwidth unit used by the terminal device to perform the initial access process, and the second identification information identifies one of the bandwidth units used by the terminal device to perform the initial access process.

34. The apparatus according to any one of claims 29 to 33, wherein

the processing unit is further configured to determine, based on identification information of the plurality of terminal devices and a mapping rule, a bandwidth unit in which a paging resource of each of the plurality of terminal devices is located, wherein the mapping rule represents a mapping relationship between identification information of the terminal device and the bandwidth unit; or
the transceiver unit is further configured to send a plurality of pieces of resource indication information to the plurality of terminal devices, wherein one piece of resource indication information indicates a bandwidth unit in which a paging resource of one of the plurality of terminal devices is located, wherein
the paging resource is used by the terminal device to detect the paging indication information.

35. The apparatus according to any one of claims 29 to 34, wherein a paging resource of a first terminal device in the plurality of terminal devices is in a second bandwidth unit, and the transceiver unit is further configured to:

send first paging early indication information on the first bandwidth unit, wherein the first paging early indication information indicates the first terminal device to detect the paging indication information; and
send first paging indication information on the paging resource of the first terminal device in the second bandwidth unit, wherein the first paging indication information indicates a first resource, and the first resource is used to carry a paging message of the first terminal device; and/or the first paging indication information indicates that system information is updated.

**36.** The apparatus according to any one of claims 29 to 35, wherein the transceiver unit is further configured to:

send the first paging early indication information on a second resource in the first bandwidth unit, wherein the first paging early indication information indicates the first terminal device to detect the paging indication information, and the plurality of terminal devices comprise the first terminal device; and

send second paging early indication information on a third resource in the first bandwidth unit, wherein the second paging early indication information indicates a second terminal device to detect the paging indication information, and the plurality of terminal devices comprise the second terminal device, wherein

a time domain resource comprised in the second resource is different from that comprised in the third resource, and/or a frequency domain resource comprised in the second resource is different from that comprised in the third resource.

**37.** The apparatus according to claim 29, wherein a paging resource used by the plurality of terminal devices to detect the paging indication information is in the first bandwidth unit, and the transceiver unit is further configured to:

send first paging early indication information on the first bandwidth unit, wherein the first paging early indication information indicates at least one of the plurality of terminal devices to detect the paging indication information, and the at least one terminal device comprises a first terminal device;

send first paging indication information on the first bandwidth unit, wherein the first paging indication information indicates a first resource, and the first resource is used to carry a paging message of the first terminal device; and

send the paging message of the first terminal device on the first resource in a second bandwidth unit.

**38.** The apparatus according to claim 37, wherein a time interval between the first resource and a paging resource used to carry the first paging indication information is greater than or equal to a first threshold, and the first threshold is related to duration needed for switching a bandwidth unit by the first terminal device.

**39.** A communication apparatus, comprising:

a transceiver unit, configured to receive first configuration information from a network device, wherein the first configuration information is used to configure a first terminal device to detect paging early indication information on a first bandwidth unit, and the paging early indication information indicates to detect or not to detect paging indication information; and

a processing unit, configured to determine to detect the paging early indication information on the first bandwidth unit, wherein

the transceiver unit is further configured to receive a reference signal from the network device on the first bandwidth unit, wherein the reference signal is used by a plurality of terminal devices to perform time synchronization and/or frequency synchronization with the network device.

**40.** The apparatus according to claim 39, wherein

the transceiver unit is further configured to receive second configuration information from the network device, wherein the second configuration information is used to configure a paging resource in a plurality of bandwidth units, and the paging resource is used by a terminal device to detect the paging indication information, wherein

the second configuration information comprises a plurality of pieces of paging resource configuration information, and one of the plurality of pieces of paging resource configuration information is used to configure a paging resource in one of the plurality of bandwidth units; or

the second configuration information comprises one piece of paging resource configuration information, and the one piece of paging resource configuration information is used to configure a paging resource in each of the plurality of bandwidth units.

**41.** The apparatus according to claim 39 or 40, wherein the plurality of bandwidth units comprise the first bandwidth unit.

**42.** The apparatus according to claim 40 or 41, wherein

the transceiver unit is further configured to receive fourth configuration information from the network device, wherein the fourth configuration information is used to configure the plurality of bandwidth units, wherein

the plurality of bandwidth units are used by the terminal device to perform an initial access process, the fourth configuration information comprises identification information of the plurality of bandwidth units, identification information of one bandwidth unit comprises first identification information and second identification information, the first identification information indicates that the bandwidth unit is a bandwidth unit used by the terminal device to perform the initial access process, and the second identification information identifies one of the bandwidth units used by the terminal device to perform the initial access process.

43. The apparatus according to any one of claims 39 to 42, wherein

the processing unit is further configured to determine, based on identification information of the first terminal device and a mapping rule, that a paging resource of the first terminal device is in a second bandwidth unit, wherein the mapping rule represents a mapping relationship between identification information of a terminal device and a bandwidth unit; or
the transceiver unit is further configured to receive resource indication information from the network device, wherein the resource indication information indicates that a paging resource of the first terminal device is in a second bandwidth unit, wherein
the paging resource is used by the first terminal device to detect the paging indication information.

44. The apparatus according to claim 43, wherein the transceiver unit is further configured to:

receive first paging early indication information on the first bandwidth unit, wherein the first paging early indication information indicates the first terminal device to detect the paging indication information; and
detect the paging indication information on the paging resource in the second bandwidth unit.

45. The apparatus according to claim 44, wherein after the first terminal device receives the first paging early indication information on the first bandwidth unit, the processing unit is further configured to:
if the first paging early indication information indicates the first terminal device to detect the paging indication information, switch or readjust an operating bandwidth unit from the first bandwidth unit to the second bandwidth unit.

46. The apparatus according to claim 44 or 45, wherein

the processing unit is further configured to: when no paging indication information is obtained through detection, or when first paging indication information is obtained through detection and no paging message of the first terminal device is obtained through detection on a first resource, switch or readjust operating bandwidth from the second bandwidth unit to the first bandwidth unit, wherein the first paging indication information indicates the first resource; and
the transceiver unit is further configured to detect the paging early indication information on the first bandwidth unit.

47. The apparatus according to claim 44 or 45, wherein the transceiver unit is further configured to:

if first paging indication information is obtained through detection, and the first paging indication information indicates a first resource, receive a paging message on the first resource, wherein the first resource is used to carry the paging message of the first terminal device; and/or
if the first paging indication information is obtained through detection, and the first paging indication information indicates that system information is updated, receive system information.

48. The apparatus according to claim 39, wherein the transceiver unit is further configured to:

if first paging early indication information is obtained through detection on the first bandwidth unit, and the first paging early indication information indicates the first terminal device to detect the paging indication information, detect the paging indication information on the first bandwidth unit; and
if no paging indication information is obtained through detection, detect the paging early indication information on the first bandwidth unit, or if first paging indication information is obtained through detection, receive a paging message on a first resource in a second bandwidth unit, wherein the first paging indication information indicates the first resource, and the first resource is used to carry a paging message of the first terminal device.

49. The apparatus according to claim 48, wherein

the processing unit is specifically configured to: when the first terminal device obtains the first paging indication information through detection, switch or readjust an operating bandwidth unit from the first bandwidth unit to the second bandwidth unit; and
the transceiver unit is specifically configured to receive the paging message on the first resource in the second bandwidth unit.

50. The apparatus according to claim 49, wherein a time interval between the first resource and a paging resource used to carry the first paging indication information is greater than or equal to a first threshold, and the first threshold is related to duration needed for switching a bandwidth unit by the first terminal device.

51. The apparatus according to claim 35, 44, or 45, wherein the first paging early indication information is a wake-up indication sequence corresponding to the first terminal device; or
the first paging early indication information comprises a plurality of indication fields, the plurality of indication fields correspond to the plurality of terminal devices, one of the plurality of indication fields indicates a corresponding terminal device to detect or not to detect the paging indication information, the first terminal device corresponds to a first indication field in the plurality of indication fields, and the first indication field indicates the first terminal device to detect the paging indication information.

52. The apparatus according to claim 51, wherein the plurality of terminal devices comprise a plurality of terminal device groups, a paging resource of one terminal device group in the plurality of terminal device groups is in a same bandwidth unit, paging resources of different terminal device groups are in different bandwidth units, a first terminal device group in the plurality of terminal device groups comprises the first terminal device, and the paging resource is used by the terminal device to detect the paging indication information; and
the first paging early indication information specifically indicates a terminal device in the first terminal device group to detect the paging early indication information.

53. The apparatus according to claim 52, wherein the first paging early indication information is a wake-up indication sequence corresponding to the first terminal device group, or the first paging early indication information is a wake-up indication sequence corresponding to the second bandwidth unit, and a paging resource of the terminal device in the first terminal device group is in the second bandwidth unit.

54. The apparatus according to claim 52, wherein the first paging early indication information comprises the plurality of indication fields; and

the plurality of indication fields correspond to the plurality of bandwidth units, one of the plurality of indication fields indicates a terminal device group whose paging resource is in a bandwidth unit corresponding to the indication field to detect or not to detect the paging indication information, the second bandwidth unit corresponds to a second indication field in the plurality of indication fields, and the second indication field indicates the first terminal device group whose paging resource is in the second bandwidth unit to detect the paging indication information; or
the plurality of indication fields correspond to the plurality of terminal device groups, wherein one of the plurality of indication fields indicates a terminal device group corresponding to the indication field to detect or not to detect the paging indication information, the first terminal device corresponds to a third indication field in the plurality of indication fields, and the third indication field indicates the terminal device in the first terminal device group to detect the paging indication information.

55. The apparatus according to claim 51, wherein the first paging early indication information specifically indicates the plurality of terminal devices to detect the paging indication information.

56. The apparatus according to any one of claims 29 to 55, wherein the paging resource comprises one or more of the following:
paging search space, a paging occasion resource, or a control resource set associated with paging search space.

57. A communication apparatus, wherein the communication apparatus comprises a processor and a storage medium, and the storage medium stores instructions; and when the instructions are run by the processor, the method according to any one of claims 1 to 10 or the method according to any one of claims 11 to 28 is implemented.

58. A computer-readable storage medium, wherein the computer-readable storage medium comprises instructions; and when the instructions are run by a processor, the method according to any one of claims 1 to 10 or the method according to any one of claims 11 to 28 is implemented.

59. A computer program product, wherein the computer program product comprises instructions; and when the instructions are run by a processor, the method according to any one of claims 1 to 10 or the method according to any one of claims 11 to 28 is implemented.

100

FIG. 1

200

| S201: Send first configuration information to a plurality of terminal devices, where the first configuration information is used to configure the plurality of terminal devices to detect paging early indication information on a first bandwidth unit, and the paging early indication information indicates to detect or not to detect paging indication information |
|---|
| S202: Send a reference signal on the first bandwidth unit, where the reference signal is used by the plurality of terminal devices to perform time synchronization and/or frequency synchronization |

FIG. 2

300

| Network device | | First terminal device |

S301: Send first paging early indication information on a first bandwidth unit, where the first paging early indication information indicates the first terminal device to detect paging indication information

S302: Switch an operating bandwidth from the first bandwidth unit to a second bandwidth unit

S303: Send first paging indication information on a paging resource in the second bandwidth unit, where the first paging indication information indicates a first resource, and/or the first paging indication information indicates that system information is updated

FIG. 3

Initial downlink BWP #1

PO resource #1

Initial downlink BWP #0

| SSB | → | PEI |

PO resource #0

FIG. 4

| Initial downlink BWP #0 | Initial downlink BWP #1 | | Initial downlink BWP #X–1 |
|---|---|---|---|
| Indication field 0 | Indication field 1 | ... | Indication field X–1 |

← m bits →

n bits

FIG. 5

Initial downlink BWP #1

PO resource
#1

Initial downlink BWP #0

Frequency domain

| SSB | → | PEI 1 | PEI 2 | → | PO resource #0 |

Time domain

**FIG. 6**

700

| Network device | First terminal device |

S701: Send first paging early indication information on a first bandwidth unit, where the first paging early indication information indicates the first terminal device to detect paging indication information

S702: Send first paging indication information on a paging resource in the first bandwidth unit, where the first paging indication information indicates a first resource

S703: Switch an operating bandwidth from the first bandwidth unit to a second bandwidth unit

S704: Send a paging message of the first terminal device on the first resource in the second bandwidth unit

**FIG. 7**

Initial downlink BWP #1

Paging
message 1

Initial downlink BWP #0

SSB → PEI → PO resource → Paging message 2

FIG. 8

Communication apparatus 900

Processing unit 910

Transceiver unit 920

Storage unit 930

FIG. 9

1000

Transceiver 1010

Memory

Processor 1020

FIG. 10

Network device 1100

| Transceiver 1110 | ⟷ | Processor 1120 |

⟰

Memory

FIG. 11

## INTERNATIONAL SEARCH REPORT

| International application No. |
| --- |
| **PCT/CN2022/097713** |

### A. CLASSIFICATION OF SUBJECT MATTER

H04W 52/02(2009.01)i; H04W 56/00(2009.01)i; H04W 72/04(2009.01)i; H04W 74/08(2009.01)i

According to International Patent Classification (IPC) or to both national classification and IPC

### B. FIELDS SEARCHED

Minimum documentation searched (classification system followed by classification symbols)

H04W 52/-;H04W 56/-;H04W 72/-;H04W 74/-

Documentation searched other than minimum documentation to the extent that such documents are included in the fields searched

Electronic data base consulted during the international search (name of data base and, where practicable, search terms used)

CNABS; CNTXT; CNKI: 寻呼早期指示, 寻呼提前指示, PEI?, 参考信号, 同步, 带宽, 寻呼时机, PO, 寻呼资源, 寻呼搜索空间, 物理广播信道块, 监测, 检测, 功耗, 省电, 降低; VEN; UETXT; EPTXT; WOTXT; IEEE: PEI?, RS, synchr+, SS, SSB, BWP+, paging early indication, PBCH, control resource set, CORESET+

### C. DOCUMENTS CONSIDERED TO BE RELEVANT

| Category* | Citation of document, with indication, where appropriate, of the relevant passages | Relevant to claim No. |
| --- | --- | --- |
| X | CN 112136349 A (MEDIATEK INC.) 25 December 2020 (2020-12-25)<br>claims 1-17, description paragraphs [0023]-[0063], figures 1-10 | 1-59 |
| A | CN 110087311 A (HUAWEI TECHNOLOGIES CO., LTD.) 02 August 2019 (2019-08-02)<br>entire document | 1-59 |
| A | CN 112740764 A (APPLE INC.) 30 April 2021 (2021-04-30)<br>entire document | 1-59 |
| A | CN 113056951 A (BEIJING XIAOMI MOBILE SOFTWARE CO., LTD.) 29 June 2021<br>(2021-06-29)<br>entire document | 1-59 |
| A | CN 114762408 A (OPPO GUANGDONG MOBILE TELECOMMUNICATIONS CO., LTD.)<br>15 July 2022 (2022-07-15)<br>entire document | 1-59 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 August 2022** | **07 September 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/097713**

| Patent document cited in search report | | | Publication date (day/month/year) | Patent family member(s) | | | Publication date (day/month/year) |
|---|---|---|---|---|---|---|---|
| CN | 112136349 | A | 25 December 2020 | TW | 202046786 | A | 16 December 2020 |
| | | | | US | 2022070783 | A1 | 03 March 2022 |
| | | | | WO | 2020216242 | A1 | 29 October 2020 |
| | | | | TW | 753411 | B1 | 21 January 2022 |
| CN | 110087311 | A | 02 August 2019 | US | 2020367196 | A1 | 19 November 2020 |
| | | | | WO | 2019144857 | A1 | 01 August 2019 |
| | | | | EP | 3737171 | A1 | 11 November 2020 |
| | | | | EP | 3737171 | A4 | 03 March 2021 |
| CN | 112740764 | A | 30 April 2021 | US | 2021259044 | A1 | 19 August 2021 |
| | | | | WO | 2020060890 | A1 | 26 March 2020 |
| | | | | WO | 2020060890 | A9 | 11 February 2020 |
| CN | 113056951 | A | 29 June 2021 | | None | | |
| CN | 114762408 | A | 15 July 2022 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110765561